(19) Europäisches Patentamt
European Patent Office
Office européen des brevets

(11) EP 1 732 997 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
**08.12.2010 Patentblatt 2010/49**

(45) Hinweis auf die Patenterteilung:
**17.10.2007 Patentblatt 2007/42**

(21) Anmeldenummer: **05716392.5**

(22) Anmeldetag: **26.03.2005**

(51) Int Cl.:
***C09D 133/06*** (2006.01) ***C08F 220/12*** (2006.01)

(86) Internationale Anmeldenummer:
**PCT/EP2005/003219**

(87) Internationale Veröffentlichungsnummer:
**WO 2005/095532 (13.10.2005 Gazette 2005/41)**

# (54) BESCHICHTUNGSMASSEN AUF BASIS EMISSIONSARMER BINDEMITTEL

COATING MASSES MADE FROM LOW-EMISSION BINDING AGENTS

MATERIAUX DE REVETEMENT A BASE DE LIANTS A FAIBLES EMISSIONS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **31.03.2004 DE 102004016647**

(43) Veröffentlichungstag der Anmeldung:
**20.12.2006 Patentblatt 2006/51**

(73) Patentinhaber: **BASF SE**
**67056 Ludwigshafen (DE)**

(72) Erfinder:
- **RANFT, Meik**
  **64625 Bensheim-Hochstädten (DE)**
- **RUPANER, Robert**
  **67158 Ellerstadt (DE)**
- **DERSCH, Rolf**
  **67434 Neustadt (DE)**
- **BAUMSTARK, Roland**
  **67434 Neustadt (DE)**
- **LACH, Christian**
  **38 Tai Tam Road, Tai Tam (CN)**
- **SCHLARB, Bernhard**
  **67067 Ludwigshafen (DE)**

(56) Entgegenhaltungen:
**EP-A- 0 810 274** **EP-A- 1 134 240**
**WO-A-00/37516** **DE-A1- 10 206 994**
**US-A- 5 082 895**

EP 1 732 997 B2

## Beschreibung

Die vorliegende Erfindung betrifft geruchsarme, lösungsmittelfrei verarbeitbare Bindemittelpolymerisate, ein Verfahren zu deren Herstellung, Beschichtungsmassen auf Basis dieser Bindemittelpolymerisate sowie deren Verwendung als pigmenthaltige Zubereitungen.

Pigmenthaltige Zubereitungen finden als Dispersionsfarben, kunstharzgebundene Putze (Dispersionsputze), Dichtungsmassen oder als Spachtelmassen zu Zwecken des Bautenschutzes oder zu dekorativen Zwecken breite Anwendung. Pigmenthaltige Zubereitungen enthalten in der Regel als Bindemittel ein filmbildendes Polymer, wenigsten ein anorganisches Pigment und gegebenenfalls einen oder mehrere anorganische Füllstoffe sowie sonstige übliche Füllstoffe. Die Qualität der Beschichtungen von pigmentierten Zubereitungen hängt maßgeblich von der Fähigkeit des filmbildenden Polymeren ab, die nichtfilmbildenden Bestandteile, die Pigmente und anorganischen Füllstoffe zu binden.

Ein geringes Pigmentbindevermögen führt zu einer schlechten mechanischen Stabilität der Beschichtung, die sich beispielsweise in einer geringen Nassabriebsfestigkeit äußert. Eine hohe Nassabriebsfestigkeit ist jedoch insbesonders bei waschbeständigen Dispersionsfarben erwünscht.

Das Pigmentbindevermögen des Bindemittels spielt eine besonders wichtige Rolle bei Zubereitungen mit einem hohen Gehalt an anorganischen Pigmenten und Füllstoffen. Derartige Zubereitungen sind in der Regel durch eine Pigmentvolumenkonzentration (PVK) >40% charakterisiert. Die Pigmentvolumenkonzentration wird üblicherweise definiert als der Quotient aus dem Gesamtvolumen der festen anorganischen Bestandteile (Pigmente+Füllstoffe) und dem Gesamtvolumen der festen anorganischen Bestandteile und dem Volumen der Polymerisatteilchen der wässrigen Bindemittelpolymerisatdispersion in % (siehe Ullmanns Enzyklopädie der technischen Chemie, 4. Auflage, Band 15, Seite 668).

Die Beschichtungen sollen insbesondere bei Anwendungen im Außenbereich gegenüber Umwelteinflüssen, wie Sonnenlicht, Feuchtigkeit und Temperaturschwankungen stabil sein. Sie sollen die beschichteten Flächen beständig gegen Aufnahme von Feuchtigkeit, wie Regen, machen, jedoch einmal aufgenommene Feuchtigkeit leicht als Wasserdampf wieder abgeben können, selbst aber nicht anschmutzen oder vergrauen. Ferner muss die Beschichtungsmasse auch auf unterschiedlichen Substraten gut haften, mit Silikonverbindungen und hoch alkalischen Silikatlösungen verträglich sein, was ebenfalls vom gewählten Bindemitteltyp abhängt. Eine weitere, vom Bindemittelpolymer abhängige Eigenschaft ist die Blockfestigkeit der Beschichtungen, inbesondere wenn es sich um Anstrichmittel handelt.

Bei Einsatz als Bindemittel in kunstharzgebundenen Putzen oder Spachtelmassen müssen in dünner als auch in dicker Schicht einwandfreie, rissfrei auftrocknende Beschichtungen erhalten werden. Diese Beschichtungen benötigen hohe Haftfestigkeiten, insbesonders wenn sie Teil eines Wärmedämmverbundsystemes bilden. Sie sollen eine geringe Wasseraufnahme aufweisen und beständig in Frost-Tau-Zyklen sein, d.h. nicht vom Untergrund abplatzen oder sich lösen. Es ist ferner sehr vorteilhaft, wenn sie zu gutem, d.h. geringem, Brandverhalten beitragen.

Zur Reduzierung der Umweltbelastung und aus arbeitshygienischen Gründen ist es wünschenswert, daß Beschichtungsmassen, insbesondere solche, die in geschlossenen Räumen verwendet werden, wie beispielsweise Dispersionsfarben, Kunststoffdispersionsputze oder Fliesenkleber, keine nichtwässrigen, flüchtigen, organischen oder anorganischen Bestandteile an die Umgebung abgeben. Dies kann u.a. dadurch erreicht werden, daß man als Bindemittel für diese Beschichtungsmassen wässrige Polymerisatdispersionen verwendet.

Wässrige Polymerisatdispersionen geeigneter Zusammensetzung weisen beim Verdampfen oder Verdunsten des Dispergiermittels, vorzugsweise Wasser, die Fähigkeit auf unterhalb ihrer Mindestfilmbildungstemperatur (MFT) transparente Polymerisatfilme zu bilden, weshalb wässrige Polymerisatdispersionen in vielfacher Weise als Bindemittel, z.B. für Anstrichfarben oder Massen zum Beschichten von Wänden (Dispersionsharzputze) Anwendung finden.

Konventionelle Bindemittel auf Basis wässriger Polymerisatdispersionen oder deren Endformulierungen enthalten jedoch in der Regel noch geringe Mengen an organischen Lösungsmitteln. Diese sind notwendig, um die Mindestfilmbildetemperatur (MFT) der Bindemittelpolymerisate zu verringern und so eine Verarbeitung der Beschichtungsmassen auch bei niedrigen Temperaturen zu gewährleisten. Auch kann die MFT der polymeren Bindemittel durch "innere Weichmachung", d.h. durch Herabsetzen der Glasübergangstemperatur (Tg) des Bindemittelpolymerisats verringert werden (siehe Ullmann's Encyclopedia of Industrial Chemistry, VCH Weinheim, 1992, Ed. 5, Vol. A21, Seite 169). Bei einer zu niedrigen MFT des polymeren Bindemittels besteht jedoch die Gefahr, dass die Beschichtungsmassen ein schlechtes Pigmentbindevermögen und keine ausreichende mechanische Festigkeit, aufweisen sowie darüber hinaus zu klebrig sind und leicht anschmutzen (siehe H. Rinno, Farbe&Lack, Jahrgang 1993, Band 99, Seiten 697 bis 704). Bei einer zu hohen MFT oder einer nicht ausreichend herabgesetzten MFT des polymeren Bindemittels wird hingegen keine ausreichende Verfilmung (Pigmentbindung) erhalten, was sich in unzureichender mechanischer Festigkeit (beispielsweise Scheuerbeständigkeit) oder verstärktem Abrieb und/oder Abplatzen äußert.

Aus Kostengründen ist es vorteilhaft, daß das polymere Bindemittel große Mengen an Pigmenten und Füllstoffen zu binden vermag. Dispersionsinnenfarben weisen beispielsweise Pigmentvolumenkonzentrationen im Bereich von 50 bis 80 % auf. Wird die vom polymeren Bindemittel tolerierte PVK überschritten, weist die Beschichtungsmasse keine ausreichende Naßabriebfestigkeit auf. Nach H. Warson in 'Synthetic Resin Emulsions', E. Benn Ltd., London, 1972,

Seiten 776ff, weisen polymere Bindemittel dann eine hohe Pigmentbindekraft auf, wenn sie 1 bis 4 Gew.-%, Carboxylgruppen aufweisende Monomere einpolymerisiert enthalten. Bei hochwertigen polymeren Bindemitteln liegt der Gehalt an diesen Monomeren sogar zwischen 2,5 und 7 Gew.-%. Andererseits besteht bei einem zu hohen Säuregehalt die Gefahr, daß das Bindemittelpolymerisat zu wasserlöslich wird und somit die Naßabriebfestigkeit der Beschichtungsmassen abnimmt, zuviel Feuchtigkeit an die darunterliegenden Schichten abgegeben wird und ein gutes Besiedlungsmedium für Algen, Pilze und Bakterien gebildet wird.

Die EP-A-652 269 beschreibt ein Acrylamid-haltiges Bindemittel für emissionsarme Beschichtungsmassen aus einem grobteiligen Latex mit Teilchengrößen im Bereich von 100 bis 500 nm und einem feinen Latex mit Teilchengrößen im Bereich von 5 bis 40 nm. Neben den Hauptmonomeren des grobteiligen Latex, die ausgewählt sind unter Styrol, Butadien, Vinylnitrilen und Acrylestern, enthält der Latex 0,1 bis 5 Gew.-% vernetzende Monomere, 0 bis 20 Gew.% ethylenisch ungesättigte Carbonsäuren und 0 bis 40 Gew.% weitere Monomere einpolymerisiert. Die Verwendung von Bindemitteln aus zwei unabhängig voneinander hergestellten Polymerisatdispersionen und teuren, vernetzend wirkenden Monomeren ist für preiswerte Beschichtungsmassen zu aufwendig. Darüber hinaus liefern die beschriebenen Dispersionsfarben weder bei Verwendung eines Bindemittels aus grobteiliger und feinteiliger Polymerisatdispersion noch bei alleiniger Verwendung der grobteiligen Polymerisatdispersion Anstrichfilme mit zufriedenstellenden Abriebwerten.

Auch die EP-A-1 134 240 offenbart Bindemittel, gekennzeichnet durch einen Säureanteil von 0 bis 4 Gew.-% und 0,001 bis 0,1 Gew.-%, bezogen auf gesamte Monomermenge, an vernetzend wirkenden Monomeren. Derartige Bindemittel eignen sich u.a. auch als Bindemittel für Dispersionsfarben und Dispersionsputze. Die Bindemittel verfügen über eine MFT von weniger als 10°C. Vernetzend wirkende Monomere sind relativ teuer, so dass bereits eine geringe Menge die Herstellkosten für das Bindemittel im beträchtlichen Maße erhöht.

Die WO-A-94/21699 beschreibt Bindemittel für lösemittelfreie Dispersionsfarben mit verbesserter Abwaschbarkeit, die zu 60 bis 100 Gew.-% aus Acryl- oder Methacrylsäure-estern, 0 bis 40 Gew.-% aus vinylaromatischen Monomeren, 0 bis 5 Gew.-% aus $\alpha,\beta$-ungesättigten Mono- oder Polycarbonsäuren und 0 bis 3 Gew.-% aus wenigstens einem $\alpha,\beta$-ungesättigten Amid aufgebaut sind. Die Beispiele beschreiben Polymerisatdispersionen, die wenigstens 2,5 Gew.-% Acrylsäure einpolymerisiert enthalten. Die in den Beispielen 6 bis 9 beschriebenen Dispersionsfarben, die als Bindemittel diese Polymerisate enthalten, weisen ebenfalls keine zufriedenstellende Abriebwerte auf.

In der EP-A-0 810 274 werden emissionsarme Bindemittel für Beschichtungsmassen mit verbesserter Abriebfestigkeit offenbart. Die als Bindemittel verwendeten Polymerisate enthalten ≤1 Gew.-% eines carbonsäurehaltigen Comonomeren und weisen einen Tg-Wert ≤10°C auf.

DE-A-102 06 994 lehrt Emulsionspolymerisate zur Verwendung als Bindemittel für Dispersionssilikat-Innenfarben, bestehend aus einem Acrylsäureester, Styrol, einer Mono- oder Dicarbonsäure und/oder einem Acrylamid mit einer Viskosität von 40 bis 400 mPas. In allen Ausführungsbeispielen werden Emulgatoren auf Basis von Nonylphenol verwendet. Alkylphenolethoxylate (APE), wie beispielsweise ethoxiliertes Nonylphenol, sind als Emulgatoren notwendig, wenn eine hohe Affinität zu hydrophoben Pigmentoberflächen gewünscht wird (siehe Farbe&Lack, Jahrgang 2002, Band 108 Seiten 58 bis 63).

DE-A-34 23 765 offenbart säurearme Polymerisate für Bindemittel in Papierstreichmassen. So zeigt Beispiel 3 ein Copolymerisat aus 39,5 Gew.-% 2-Ethylhexylacrylat, 39,5 Gew.-% n-Butylacrylat, 20 Gew.-% Styrol und 1 Gew.-% Acrylsäure, das in Gegenwart von 17 Teilen einer 30 gew.-%igen Formaldehydlösung hergestellt wird und zur Bildung von 10 Teilen Koagulat führt. Ohne Mitverwendung von Formaldehydlösung erhält man 300 Teile an Koagulat (Vergleichsbeispiel 3). Säurearme Polymerisate weisen also Stabilitätsprobleme auf, die durch Zuhilfenahme von Formaldehydlösung überwunden werden. Für Anwendungen bei Anstrichmitteln, insbesondere im Innenbereich, ist die Verwendung von Formaldehyd nicht akzeptabel.

DE-A-198 58 851 beschreibt wässrige Copolymerisatdispersionen, insbesondere in elastischen Beschichtungen. Die Polymerisate werden erhalten durch Emulsionspolymerisation von

a) 40 bis 99,9 Gew.-% mindestens eines Esters einer ungesättigten Carbonsäure und bis zu 40 Gew.-% eines Vinylaromaten,
b) 0,05-10 Gew.-% einer ungesättigten ein- oder zweibasigen Säure und 0 bis 10 Gew.-% eines ungesättigten Carbonsäureamides,
c) 0,05 bis 10 Gew.-% eines ungesättigten, vernetzend wirkenden Monomeren und
d) 0 bis 30 Gew.-% eines sonstigen, copolymerisierbaren Monomeren.

Die Polymerisate weisen einen Feststoffanteil von 20-65 % auf, sowie eine Glasübergangstemperatur von -50 bis +35°C auf. Die Verwendung In elastischen Beschichtungen und erfordert die Mitverwendung von vernetzend wirkenden Monomeren, was bewirkt, dass das entsprechende Kunstharz relativ teuer wird. Ferner können die Dispersionen Carbonsäureamide enthalten, sowie Polyacrylamide als Schutzkolloid und Mercaptane, können mit Ammoniak neutralisiert werden und enthalten Löse- und Filmbildemittel. Alle diese Faktoren wirken sich nachteilig auf den Geruch der Produkte aus. Eine mögliche Mitverwendung von Rongalit setzt ferner einen signifikanten Anteil an Formaldehyd durch

Abspaltung frei. Insgesamt erweisen sich derartige Polymerisate für emissionsarme Bindemittel in Anstrichstoffen als wenig geeignet.

EP-A-0 331 011 beschreibt die Herstellung schutzkolloid-freier und/oder emulgatorarmer Dispersionen, die aufgebaut sind aus einem oder mehreren Monomeren aus der Gruppe von Acrylsäure- oder Methacrylsäureestern und 0,1 bis 2 Gew.-% einer wasserlöslichen, konjugierten und 4 bis 26 C-Atome enthaltenden Sulfonsäure und/oder ihre Salze. Die Produkte eignen sich auch als Bindemittel für Farben. Sie werden in Gegenwart formaldehydliefernder Verbindungen hergestellt oder in Gegenwart von alkylphenolhaltigen Emulgatoren.

US 5,082,895 offenbart Emulsionspolymerisate mit einem sehr hohen Feststoffgehalt und großer Partikelgröße und deren Verwendung in korrosionsbeständigen Farben. Die Emulsionspolymerisate zeichnen sich jedoch durch Styrolanteile deutlich kleiner als 45 Gew.-% aus.

Aufgabe der vorliegenden Erfindung war es, angesichts des vorstehenden Standes der Technik Beschichtungsmassen auf Basis verbesserter geruchsarmer, lösungsmittelfrei verarbeitbarer Bindemittel mit hohem Pigmentbindevermögen zur Verfügung zu stellen, die einfach und unkompliziert herstellbar sind und zu deren Herstellung keine ökologisch bedenklichen Komponenten verwendet werden, die jedoch zu stabilen, und (nass)abriebsfesten und gut deckenden Farben führen. Diese Farben sollen zur Herstellung von Innenfarben, als auch zur Herstellung von Außenfarben und Dispersionsputzen geeignet sein.

Unter ökologisch bedenklichen Substanzen sind diejenigen Komponenten zu verstehen, die zu gesundheitlich bedenklichen Substanzen oder Allergene zählen, wie z.B. Acrylamid, Formaldehyd, Acetaldeyhd, verdampfende Lösungsmittel, flüchtige Filmbildehilfsmittel, Weichmacher, Restmengen an flüchtigen Monomeren, Schwermetalle und Verbindungen, die möglicherweise hormonelle Wirkung entfalten können. Zu letzteren zählt man derzeit u.a. Alkylphenolethoxylate. Verfügen derartige Komponenten über einen niedrigen Siedepunkt, so werden sie besonders leicht an die Umgebung abgegeben.

Dabei sollen die Bindemittel und die Beschichtungsmassen insbesondere eine hohe Silikatverträglichkeit aufweisen und lagerstabil sein.

Gelöst wurde die Aufgabe durch die Bereitstellung von Bindemitteln, enthaltend wenigstens ein Polymerisat, welches durch radikalisch initiierte wässrige Emulsionspolymerisation einer Mischung von ethylenisch ungesättigten Monomeren erhalten wird, die aus

| | |
|---|---|
| 40 bis 50 Gew.-% | 2-Ethylhexylacrylat (Monomer A) |
| 0 bis 40 Gew.-% | eines oder mehrerer Monomeren, dessen Homopolymerisat eine Glasübergangstemperatur <10°C aufweist (Monomere B), |
| 45 bis 55 Gew.-% | Styrol (Monomer C), |
| 1,5 bis 3 Gew.-% | wenigstens eines säuregruppenhaltigen Monomeren ausgewählt aus der Gruppe Acrylsäure oder Methacrylsäure (Monomere D), und |
| 0 bis 5 Gew.-% | wenigstens eines weiteren Monomeren mit mindestens einer Hydroxy- und/oder Silan-Gruppe in der Seitenkette (Monomere E), |

jeweils bezogen auf die Gesamtmenge der zur Polymerisation eingesetzten ethylenisch ungesättigten Monomeren, besteht, unter Verwendung Alkylphenolether-freier Emulgatoren, eines oder mehrerer Schutzkolloide und eines oder mehrerer Initiatoren wobei das Polymerisat eine Mindestfilmbildungstemperatur von unter 15°C, aufweist, sowie weniger als 0,01 Gew.-% Verbindungen mit einem Siedepunkt unter 50°C enthält und wobei bei der Herstellung der Bindemittel keine Verbindungen mit einem Siedepunkt unter 50°C und keine Verbindungen, die derartige Verbindungen hydrolytisch abspalten können, eingesetzt werden.

Die Bindemittel enthalten vorzugsweise weniger als 0,005 Gew.-%, besonders bevorzugt weniger als 0,001 Gew.-%, mit einem Siedepunkt unter 50°C, besonders bevorzugt unter 35°C.

Ferner betrifft vorliegende Erfindung auch ein Verfahren zur Herstellung erfindungsgemäßer wässriger Polymerisatdispersionen sowie deren Verwendung zum Beschichten, Kleben, Dichten, Streichen, Sprühen, Spritzen oder Imprägnieren, wobei die Verwendung als Bindemittel für Anstrichmittel bevorzugt ist.

Dabei werden bei der Herstellung der Bindemittel keine Verbindungen mit einem Siedepunkt unter 50°C. vorzugsweise unter 35°C, und keine Verbindungen, die derartige Verbindungen hydrolytisch abspalten können, eingesetzt.

Beispiel für Verbindungen, die Verbindungen mit einem niedrigen Siedepunkt hydrolytisch abspalten können, sind Acrylamid und Methacrylamid, sowie deren Homo- und Copolymerisate (Freisetzung von Ammoniak), Rongalit (Freisetzung von Formaldehyd) und Vinylacetat sowie dessen Homo- und Copolymerisate (Freisetzung von Acetaldehyd und Essigsäure).

Die erfindungsgemäßen Polymerisate sind aufgebaut aus:

Monomer A:

40 bis 50 Gew.-%, 2-Ethylhexylacrylat.

Monomer B:

0 bis 40 Gew.-%, vorzugsweise 3 bis 35 Gew.-%, besonders bevorzugt 5 bis 30 Gew.-%, dessen Homopolymerisat eine Glasübergangstemperatur <10°C aufweist.

Mit der Glasübergangstemperatur Tg, ist der Grenzwert der Glasübergangstemperatur gemeint, dem diese gemäß G. Kanig (Kolloid-Zeitschrift & Zeitschrift für Polymere, Band 190, Seite 1, Gleichung 1) mit zunehmendem Molekulargewicht zustrebt. Die Tg wird nach dem DSC-Verfahren ermittelt (Differential Scanning Calorimetry, 20 K/min, midpoint-Messung, DIN 53 765). Die Tg-Werte für die Homopolymerisate der meisten Monomeren sind bekannt und z.B. in Ullmann's Ecyclopedia of Industrial Chemistry, VCH Weinheim, 1992, Ed. 5, Vol. A21, Seiten 169ff, aufgeführt; weitere Quellen für Glasübergangstemperaturen von Homopolymerisaten bilden z.B. J. Brandrup, E.H. Immergut, Polymer Handbook, Ed. 15, J. Wiley, New York 1996, Ed. 2, J.Wiley, New York 1975, und Ed. 3, J. Wiley, New York 1989. Für die Erzielung der gewünschten Glasübergangstemperatur Tg des Bindemittelpolymerisates durch Auswahl geeigneter Arten und Mengen von Monomeren A bis E ist die Formel von Fox (T.G. Fox, Bull. A-mer. Phys. Soc. (Ser. II) Jahrgang 1956, Band 1, Seiten 123ff) hilfreich, nach der für die Glasübergangstemperatur von Copolymerisaten in guter Näherung gilt:

$$1/Tg = x_1/Tg_1 + X_2/Tg_2 + \ldots\ldots + x_n/Tg_n$$

worin $x_1$, $x_2$, ... $x_n$ die Massenbrüche der Monomeren und $Tg_1$, $Tg_2$, ..., $Tg_n$ die Glasübergangstemperatur der jeweils aus einem der Monomeren 1, 2,..., n aufgebauten Homopolymerisates in Kelvin bedeuten.

Geeignete Monomere B sind Acrylsäureester von linearen oder verzweigten $C_1$- bis $C_{10}$-Alkanolen, beispielsweise n-Propyl, n-Butyl, iso-Butyl, n-Pentyl, n-Hexyl, n-Nonyl- oder n-Decyl-, oder cyclischen $C_5$- bis $C_{10}$-Cycloalkylgruppen, wie dem Cyclopentyl- oder Cyclohexyl-Rest. Es können auch n-Hexylmethacrylat, Butadien und/oder Vinylether von $C_3$- bis $C_{10}$-Alkanolen, verzweigte und unverzweigte $C_3$- bis $C_{10}$-Olefine verwendet werden.

Insbesonders bevorzugt als Monomere B sind n-Butylacrylat, n-Hexylacrylat, n-Hexylmethacrylat, 2-Ethylhexylmethacrylat und/oder Butadien oder deren Mischungen verwendet.

Monomere C:

Styrol wird als Monomer C verwendet.

Monomere D:

1.5 bis 3 Gew.-%, wenigstens eines säuregruppenhaltigen Monomeren, ausgewählt aus der Gruppe Acrylsäure und Methacrylsäure, insbesondere Acrylsäure.

Monomere E:

0 bis 5 Gew.-% wenigstens eines weiteren Monomeren mit mindestens einer Hydroxy- und/oder Silan-Gruppe in der Seitenkette.

Bei den Monomeren E handelt es sich um Monomere, die eine erhöhte Wasserlöslichkeit aufweisen, jedoch nicht über saure Gruppen verfügen oder dem Polymerisat zu sätzliche funktionelle Gruppen zur Adhäsion an die weiteren in den Beschichtungsmitteln enthaltenen Komponenten verleihen. Sie erhöhen im allgemeinen das Pigmentbindevermögen der Bindemittel. Sie sind mit einem Anteil von 0 bis 5 Gew.-% enthalten, bevorzugt unter 3 Gew.-%. Es kommen inbesonders Hydroxyethyl(meth)acrylat, Hydroxypropyl(meth)acrylat, Polyethylenoxid(meth)acylat, und Polyvinylalkohol in Betracht. Ihre Wasserlöslichkeit liegt üblicherweise bei 25°C oberhalb von 100 g /1000 $cm^3$ Wasser.

Eine weitere Erhöhung des Pigmentbindevermögens der Polymerisatdispersionen kann beispielsweise durch Einpolymerisieren von Silanen, die olefinische Doppelbindungen enthalten, beispielsweise Vinylsilane oder Methacryloxyalkylsilane (siehe oben, wie auch EP-A-0 327 006, EP-A-0 327 376 oder EP-A-0 612 771) erfolgen. Weiterhin können Silangruppen nach EP-A-0 640 629 durch Polymerisation in Gegenwart von Epoxysilanen, beispielsweise Glycidyloxypropyltrimethoxysilan, oder nach EP-A-0 327 376 durch Polymerisation in Gegenwart von Mercaptoalkyltrisalkoxysilan

in das Bindemittelpolymerisat eingeführt werden.

Das Polymerisat aus den Monomeren A bis E enthält ausreichend Monomer A und B, so dass eine MFT des Polymerisates von unter 15°C, von unter 12°C, besonders bevorzugt von unter 10°C, erhalten wird. Eine niedrige MFT der Polymerisate garantiert eine gute Verfilmung der Polymerisate, auch in lösemittel- und koaleszenzmittel-freien Formulierungen und führt daher zu guter und hoher Pigmentverträglichkeit. Eine zu niedrige MFT führt zu klebrigen und dadurch leicht verschmutzenden Beschichtungsmassen. Eine höhere MFT, ein höheres Molekulargewicht der Bindemittelpolymerisate sowie eine größere mittele Teilchengröße der Bindemittelpolymerisate, verschlechert entsprechend das Pigmentbindevermögen. Um auf optimales Pigmentbindevermögen zu kommen, lehrt der Stand der Technik den Einsatz von Stufenpolymerisaten, oder die Mitverwendung von vernetzend wirkenden Monomeren, um das mittlere Mokeluargewicht anzuheben oder die Copolymerisation von Acrylamid, um einen höheren Gelanteil zu erzeugen. Gegen Acrylamid und daraus in gewissem Umfang durch Hydrolyse entstehenden Ammoniak bestehen mittlerweile Gesundheitsbedenken, da diese Stoffe beim Trocknen an die Umgebung abgegeben werden. Derartige Hydrolyse-Reaktionen erfolgen inbesonders in alkalischen Formulierungen oder bei auf stark alkalischen Untergründen aufgetragenen Beschichtungen.

Erfindungsgemäß wurde gefunden, dass sich bei Copolymerisaten von 2-Ethylhexylacrylat und Styrol bereits ausreichend hoch vernetzte und verzweigte Polymerstrukturen ausbilden, dass auf Mitverwendung von vernetzenden oder stark gelbildenden Monomeren verzichtet werden kann. Vermutlich unterstützt das Einbringen der verzweigten Seitenkette des Monomeren 2-Ethylhexylacrylat (Monomer A) die verstärkt ablaufende Pfropfung der Polymerhaupt- und Seitenkette an den tertiären CH-Gruppen. Die ausgesprochen hydrophoben Polymerbausteine führen ferner zu einer vorteilhaften geringeren Wasserempfindlichkeit der Beschichtungen und damit auch zu besserer Nassscheuerfestigkeit der Beschichtungsmassen.

Das in den erfindungsgemäßen Beschichtungsmassen verwendete wenigstens eine Polymerisat wird vorteilhaft durch radikalisch initiierte wässrige Emulsionspolymerisation der genannten Monomere A bis E in Gegenwart von 0,1 bis 1,0 Gew.-%, vorzugsweise 0,1 bis 0,5 Gew.-% und insbesondere 0,2 bis 0,3 Gew.-%, jeweils bezogen auf die Gesamtmenge der Monomeren A bis E, wenigstens eines radikalischen Polymerisationsinitiators durchgeführt. Als radikalische Polymerisationsinitiatoren kommen alle diejenigen in Betracht, die in der Lage sind, eine radikalische wässrige Emulsionspolymerisation auszulösen. Es kann sich dabei prinzipiell sowohl um Peroxide, ggf. in Gegenwart von Reduktionsmitteln, als auch um Azoverbindungen handeln. Als Peroxide können prinzipiell anorganische Peroxide, wie Peroxodisulfate, wie die Alkalimetallsalze der Peroxodischwefelsäure, wie beispielsweise deren Natrium- oder Kaliumsalz, oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Oxidationsmittel für Redoxinitiatorsysteme kommen im wesentlichen die oben genannten Peroxide in Betracht. Als entsprechende Reduktionsmittel können oxidierbare Endiole, wie Dihydroxy-maleinsäure, Benzoin und/oder Ascorbinsäure oder Isoascorbinsäure, sowie reduzierende Saccharide, wie Sorbose, Glucose, Fructose und/oder Dihydroxyaceton eingesetzt werden. Gegebenfalls werden Salze mehrwertiger Metalle, wie Eisen-(II)-sulfat, Eisen-(II)-ammoniumsulfat, Eisen-(II)-phosphat als katalytisch aktive Komponenten in geringen Mengen mitverwendet. Besonders bevorzugt sind Natriumperoxodisulfat und Wasserstoffperoxid, gegebenenfalls in Kombination. Bevorzugt wird unter 0,6 Gew.-%, ganz besonders bevorzugt unter 0,5 Gew.-% an Natriumperoxodisulfat eingesetzt.

Für die Herstellung des wenigstens einen Polymerisats wird vorzugsweise neben den für eine wässrige Emulsionspolymerisation üblichen oberflächenaktiven Substanzen wenigstens ein nichtionischer oder anionischer Emulgator in Mengen von vorzugsweise 0,3 bis 10 Gew.-%, insbesondere zwischen 0,7 bis 7 Gew.-% und besonders bevorzugt 0,9 bis 4 Gew.-%, jeweils bezogen auf die Gesamtmonomermenge, verwendet. Vorzugsweise verwendet man eine Kombination aus einem anionischen und nichtionischen Emulgator oder zweier anionischer Emulgatoren, inbesonders in einem Gewichtsverhältnis von 1:5 bis 5:1. Mischungen von Emulgatoren werden bevorzugt eingesetzt, da sich hierbei Vorteile hinsichtlich Schaumneigung ergeben. Vorteilsweise wird eine geringe Elektrolytfracht eingestellt.

Einsetzbare nichtionische Emulgatoren sind aliphatische Ethoxylate langkettiger Alkohole sowie Polyethylenoxid/Polypropylenoxid-Blockcopolymere. Bevorzugt werden Ethoxylate langkettiger Alkanole, insbesondere von Fettalkoholen oder Oxoalkoholen verwendet. Geeignete Alkohole sind $C_8$- bis $C_{36}$-Alkohole, vorzugsweise $C_{10}$- bis $C_{22}$-Alkohole, besonders bevorzugt $C_{12}$- bis $C_{18}$-Alkohole. Der mittlerer Ethoxylierungsgrad beträgt typischerweise 3 bis 50, vorzugsweise 3 bis 30.

Weitere gebräuchliche Emulgatoren sind vorzugsweise anionischer Natur. Hierzu zählen neutralisierte $C_8$-bis $C_{12}$-Alkylsulfate, von Schwefelsäurehalbestern ethoxylierter linearer oder verzweigter $C_{12}$- bis $C_{18}$-Alkanole mit einem mittlerer Ethoxylierungsgrad von 2 bis 50, von $C_{12}$- bis $C_{18}$-Alkylsulfonsäuren und von $C_8$- bis $C_{18}$-Alkylarylsulfonsäuren oder Sulfobernsteinsäureester oder -halbester oder -esteramide. Auch neutralisierte primäre oder-sekundäre-Alkyl- oder ethoxilierte Alkylphospate oder Phosphonate mit einem mittlerer Ethoxylierungsgrad von 2 bis 50 und einem $C_{12}$- bis $C_{18}$-Alkylrest können eingesetzt werden. Die Emulgatoren liegen bevorzugt als Natrium- oder Kaliumsalze oder in Form substituierter Ammoniumsalze, wie z.B. dem Triethanolamin-, Diethanolamin-, Monoethanolamin-Salz vor. Die einfachen Ammoniumsalze, die durch Neutralisation mittels Ammoniak-Lösung erhalten werden, werden jedoch wegen der potentiellen Ammoniak-Emmission nicht eingesetzt. Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208). Bevorzugte anionische grenzflächenaktive Substanzen sind die Natriumsalze der Alkylsulfate.

Als weitere anionische Emulgatoren haben sich ferner Verbindungen der allgemeinen Formel I bewährt

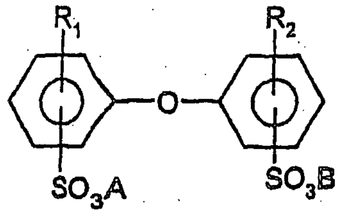

worin $R^1$ und $R^2$ unabhängig voneinander Wasserstoff oder $C_1$- bis $C_{24}$-Alkyl und nicht gleichzeitig Wasserstoff oder $C_1$- bis $C_3$-Alkyl bedeuten, und A und B Alkalimetallionen sein können. In der allgemeinen Formel I bedeuten $R^1$ und $R^2$ bevorzugt lineare oder verzweigte $C_6$- bis $C_{18}$-Alkylreste, insbesondere mit $C_6$-, $C_{12}$- und $C_{16}$-Alkylreste oder ein H-Atom. A und B sind bevorzugt Natrium, Ammonium oder Kalium, wobei Natrium besonders bevorzugt ist. Besonders vorteilhaft sind Verbindungen I, in denen A und B Natrium, $R^1$ ein verzweigter $C_{12}$-Alkylrest und $R^2$ ein H-Atom oder $R^1$ ist. In der Regel werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, z.B. aus US-4,269,749 und EP-A-0 952 161 und im Handel erhältlich und werden bevorzugt in Kombination mit einem anderen anionischen Emulgator verwendet.

Darüber hinaus werden geeignete Schutzkolloide in Kombination mit vorstehenden Emulatoren, wie beispielsweise Polyvinylalkohole, Cellulosederivate oder Vinylpyrolidon enthaltende Copolymerisate eingesetzt. Eine ausführliche Beschreibung weiterer geeigneter Schutzkolloide findet sich in Houben-Weyl, Methoden der Organischen Chemie, Bd. 14/1, Makromolekulare Stoffe, Georg-Thieme-Verlag, Stuttgart, 1961, Seiten 411 bis 420. Die Gesamtmenge an Schutzkolloiden macht üblicherweise ein Vielfaches, d.h. bis zum 10-fachen der Gew.-Menge an Emulgatoren aus.

Das Molekulargewicht der Polymerisate aus den Monomeren A bis E kann prinzipiell durch Zugabe geringer Mengen, unter 2 Gew.-%, bezogen auf die Gesamtmenge der zu polymerisierenden Monomere, einer oder mehrerer, das Molekulargewicht regelnder Substanzen, z.B. organische Thioverbindungen, bevorzugt Thioalkylsilane, oder Allylalkohole, eingestellt werden. Bevorzugt werden jedoch Polymerisate, die in Abwesenheit solcher Verbindungen hergestellt wurden.

Zur photochemischen nachvernetzenden Härtung haben sich Acetophenon, Benzophenon sowie deren Derivate bewährt. Diese Substanzen führen nach Applikation und Trocknung an der Fassade unter Lichteinwirkung zu Nachhärtungsreaktionen in der Farbe, die inbesonders das Anschmutzverhalten der Farbe positiv beeinflusst. Besonders bevorzugt wird Benzophenon und/oder ein Benzophenon-Derivat eingesetzt. Derartigen Mischungen sind z.B. aus EP-A-0 209 831 bekannt. Auch copolymerisierbare Derivate sind dem Stand der Technik bekannt. Diese Komponenten werden üblicherweise in Mengen von 0,03 bis 2 Gew.-%, bezogen auf Gesamtpolymer, der noch warmen Dispersion zugesetzt.

Herstellung der Emulsionspolymerisate:

Die Herstellung der erfindungsgemäßen Bindemittel erfolgt nach dem Verfahren der radikalischen wässrigen Emulsionspolymerisation in Gegenwart der oben genannten Dispergiermittel und radikalischen Polymerisationsinitiatoren. Bei diesem Verfahren wird die Mischung der Monomeren unter Zuhilfenahme von Emulgiermitteln und Wasser in eine Emulsion überführt, und diese wird dem eigentlichen Polymeridsationsgefäß zugegeben. Das Verhältnis der Wasserphase zur Gesamtmenge der Monomeren wird dabei entsprechend dem gewünschten Feststoffgehalt des herzustellenden Emulsionspolymerisates gewählt. Es werden bevorzugterweise Feststoffanteile von 30 bis 65 Gew.-% angestrebt, ganz bevorzugt 40 bis 55 Gew.-%, um ausreichend konzentrierte Beschichtungsmassen formulieren zu können.

Die Emulsionspolymerisation kann sowohl kontinuierlich als auch chargenweise (Batch-Fahrweise), vorzugsweise jedoch nach einem halbkontinuierlichen Verfahren erfolgen. Beim letzteren wird eine Teilmenge der zu polymerisierenden Monomeren im Reaktionsgefäß vorgelegt und die Restmenge kontinuierlich, linear, in Stufen oder als Gradient dem Polymerisationsansatz zugeführt. Bevorzugt ist ein halbkontinuierliches Zulaufverfahren, bei dem bis zu 20 Gew.-%, der Monomeren gemeinsam mit einer Teilmenge des Polymerisationsinitiators und des Emulgators bei erhöhter Temperatur im Reaktionsgefäß vorgelegt werden und die verbleibende Restmenge der Monomeren, des Initiators und des Emulgators dem Polymerisationsansatz zugefügt werden. Aus praktischer Sicht, z.B. aus Gründen der Leitungsreinigung, kann es auch nach vollständiger Zudosierung der Emulsion vorkommen, dass geringe, d.h. im allgemeinen weniger als 5 Gew.-%, der Monomeren, einzeln oder als Mischung, in nicht emulgierter Form dem Reaktionsgefäß zugegeben werden.

Die erforderlichen Dosierzeit der Monomeremulsion hängt im wesentlichen von dem eingestelltem Verhältnis Monomer zu Wasser und der zur Verfügung gestellten Kühlleistung des Polymerisationsreaktors ab. Bevorzugt ist ein Zulaufverfahren mit möglichst kurzen Zulaufszeiten, d.h. die Monomeren werden, vorzugsweise als wässrige Emulsion, dem Reaktionsansatz innerhalb von 1 bis 6 Stunden, bevorzugt zwischen 2 und 5 Stunden zugeführt.

Neben der saatfreien Herstellungsweise kann zur Einstellung der Polymerteilchengroße die Emulsionspolymerisation nach dem Saatlatex-Verfahren oder in Gegenwart eines in-situ hergestellten Saatlatex erfolgen. Verfahren hierzu sind bekannt und können dem Stand der Technik entnommen werden (siehe beispielsweise EP-B-0 040 419 sowie Encyclopedia of Polymer Science and Technology, Vol. 5, John Wiley & Sons Inc., New York, 1966, Seiten 847ff).

So empfiehlt der Stand der Technik, beim Zulaufverfahren eine definierte feinteilige Saat-Polymerisatdispersion im Polymerisationsgefäß vorzulegen und dann die Monomere auf die Saatpartikel aufzupfropfen. Hierbei wirken die Saat-Polymerisatteilchen als 'Polymerisationskeime'. Während der Emulsionspolymerisation kann ggf. weitere Saatdispersion zugegeben werden, um breitere Größenverteilungen zu erhalten (vgl. hierzu beispielsweise DE-A-42 13 965). Anstelle der Zugabe eines definierten Saatlatex kann dieser auch in-situ erzeugt werden. Hierzu wird beispielsweise ein Teil der Monomere zusammen mit Emulgator vorgelegt und coplymerisiert, wobei ein relativ feinteiliger Latex entsteht. Anschliessend wird im gleichen Polymerisationsgefäß die eigentliche Polymerisation nach dem Zulaufverfahren durchgeführt (siehe auch DE-A-42 13 965).

Die Art und Weise, wie der Initiator der Emulsionspolymerisation zudosiert ist, ist nicht kritisch. Der Initiator kann sowohl vollständig im Polymerisationsgefäß vorgelegt oder aber, nach Maßgabe seines Verbrauchs, im Verlauf der Emulsionspolymerisation kontinuierlich oder stufenweise zugesetzt werden. Die Vorgehensweise hängt sowohl von der chemischen Natur des Initiators als auch von der Polymerisationstemperatur ab und kann vom Fachmann je nach Bedarf gewählt werden. Bevorzugt wird eine kontinuierliche oder stufenweise Zudosierung zum Reaktionsansatz.

Polymerisationsdruck und Polymerisationstemperatur sind gleichfalls von untergeordneter Bedeutung. Im allgemeinen werden Temperaturen zwischen 40 und 120°C, vorzugsweise von 50 bis 95°C und besonders bevorzugt zwischen 70 und 90°C eingestellt.

Im Anschluß an die eigentliche Polymerisationsreaktion ist es in der Regel erforderlich, Geruchsträger, wie Restmonomere und andere organische flüchtige Bestandteile aus der erfindungsgemäßen wässrigen Polymerisatdispersion zu entfernen. Dies kann in an sich bekannter Weise durch Kombination eines chemisch wirkenden Nachpolymerisationssystemes mit einem destillativen Verfahren erfolgen, wahlweise nacheinander oder gleichzeitig.

Die Absenkung des Restmonomerengehalts kann weiterhin chemisch durch radikalische Nachpolymerisation, insbesondere unter Einwirkung von Redoxinitiatorsystemen, wie sie z.B. in der EP-A-1 021 468, DE-A-44 35 423, DE-A-44 19 518 sowie in der DE-A-44 35 422 aufgeführt sind. Als Oxidationsmittel zur redoxinitiierten Nachpolymerisation eignen sich insbesondere tert.-Butylhydroperoxid, Cumolhydroperoxid oder Alkaliperoxodisulfate. Geeignete Reduktionsmittel sind Ascorbinsäure, Isoascorbinsäure bzw. reduzierend wirkende Zuckerverbindungen. Natriumhydroxymethansulfinat wird aber wegen der Formaldehydfreisetzung nicht verwendet.

Die Nachpolymerisation mit dem Redoxinitiatorsystem wird im Temperaturbereich von 10 bis 100°C, vorzugsweise bei 20 bis 90°C, durchgeführt. Die Redoxpartner können der wässrigen Dispersion unabhängig voneinander vollständig, portionsweise, abwechseld oder kontinuierlich über einen Zeitraum von 10 Minuten bis 4 Stunden zugegeben werden. Zur Verbesserung der Nachpolymerisationswirkung der Redoxinitiatorsysteme können der Dispersion auch lösliche Salze von Metallen wechselnder Wertigkeit, wie Eisen, Kupfer oder Vanadiumsalze, zugesetzt werden. Häufig werden auch Komplexbildner zugegeben, die die Metallsalze unter den Reaktionsbedingungen in Lösung halten.

Die destillative Abtrennung störender Nebenprodukte kann in an sich bekannter Weise durch längeren Kontakt der Dispersion mit einem Gas in fein verteilter Form erfolgen. Die turbulent verteilten Gasbläschen in der Dispersion sind in der Lage flüchtige Geruchsträger durch den ständigen Grenzflächenkontakt aufzunehrnen und dadurch abzureichern. Die gängigsten Abreicherungsgase sind angefeuchtete Luft oder Stickstoff, Kohlendioxid oder Wasserdampf. Die Abreicherungstemperatur und Zeitdauer hängt von den abzureichernden Komponenten, deren Flüchtigkeit, Löslichkeit und Konzentration ab. Sie wird vorzugsweise bei einer Temperatur von 40 bis 95°C und einer Gesamteinwirkzeit von 3 bis 6 Stunden durchgeführt. Ganz bevorzugt wird Wasserdampf eingesetzt (Wasserdampfdestillation); dabei ist es in der Regel erforderlich, ein Verhältnis von Wasserdampf zu Dispersion im Verhältnis von 3 bis 10, bevorzugt zwischen 4 und 6, einzustellen. Je nach Flüchtigkeit der Komponenten wird die Abreicherung im technischen Maßstab unter Druck oder im leichten Vakuum durchgeführt, im Labormaßstab vorzugsweise bei Umgebungsdruck. Die Effektivität der Maßnahmen wird durch den sog. VOC-Anteil (volatile organic compounds) überprüft, der mittels Gaschromatographie ermittelt wird und bei einer Injektionstemperatur von 250°C bestimmt wird. Dabei verdampfen alle organischen flüchtigen Komponenten, die einen Siedepunkt von unterhalb von 250°C aufweisen und in Summe den Geruch des Produktes ausmachen.

Es ist bevorzugt, die Polymerisatdispersion abschliessend mit einer geruchsarmen Base, vorzugsweise mit

Alkali- oder Erdalkalimetallhydroxyden, Erdalkalimetalloxiden oder nichtflüchtigen Aminen zu neutralisieren. Zu den nichtflüchtigen Aminen zählen insbesondere ethoxilierte Diamine oder Polyamine, wie sie z.B. unter dem Namen Jeffamine (Texaco Chemical Co.) kommerziell erhältlich sind. Bevorzugt wird jedoch mit wässriger Natron- oder Kalilauge neutralisiert, so dass vorzugsweise ein pH Wert von etwa 6,5 bis 9 erhalten wird.

Die erfindungsgemäßen wässrigen Polymerisatdispersionen sind aufgrund ihrer Herstellungsweise nahezu vollständig frei von Lösungsmitteln, Restmonomeren oder anderen flüchtigen Bestandteilen und somit geruchs- und emissionsarm. Sie können aufgrund ihrer niedrigen MFT auch ohne Lösemittel und/oder Koaleszenzmittel formuliert werden.

Der über quasielastische Lichtstreuung (ISO-Norm 13 321) ermittelte zahlenmittlere Teilchendurchmesser der in den wässrigen Polymerisatdispersionen enthaltenen Polymerisatteilchen liegt vorzugsweise im Bereich von 80 bis 300 nm, besonders bevorzugt im Bereich von 100 bis 200 nm. Die Polymerisatteilchen weisen in der Regel eine monomodale Teilchengrößenverteilung auf. Die Lichtdurchlässigkeit der Dispersionen liegt in der Regel im Bereich von 40% bis 90%, vorzugsweise im Bereich von 45% bis 70%, in einer 0,01 gew.-%igen Verdünnung. Die Lichtdurchlässigkeit einer verdünnten Dispersion korreliert über weite Bereiche mit der Größe der dispergierten Teilchen, d.h. je größer der LD-Wert (Lichtdurchlässigkeit einer 0,01 gew.-%igen Probe in einem handelsüblichen Photometer), desto geringer ist der Durchmesser der dispergierten Teilchen.

Ein weiterer Gegenstand der vorliegenden Anmeldung ist ein Verfahren zur Herstellung von Bindemitteln durch radikalisch initiierte wässrige Emulsionspolymerisation.

Ein weiterer Gegenstand der vorliegenen Anmeldung sind Beschichtungsmassen, enthaltend das erfindungsgemäße Bindemittel.

Ein weiterer Gegenstand der vorliegenen Anmeldung ist die Verwendung der erfindungsgemäßen Beschichtungsmassen als Dispersionsfarbe, Kunststoffdispersionsputz, Fliesenkleber oder Dichtungsmasse, ggf. in Kombination mit einer Silikonemulsion und/oder Silikatlösung.

Die erfindungsgemäßen Beschichtungsmassen verfügen über eine hohe Nassscheuerfestigkeit, ein gutes Anschmutzverhalten, sind lösungs- und filmbildemittelfrei formulierbar und enthalten keine kritischen, d.h. gesundheitsbedenklichen Komponenten.

Anwendungen und Zusammensetzungen der Beschichtungsmassen:

Die erfindungsgemäßen Polymerisatdispersionen eigenen sich zur Herstellung emissionsarmer und lösungsmittelfreier Beschichtungsmassen. Unter Beschichtungsmassen versteht man beispielsweise Kunststoffdispersionsputze, Fliesenkleber, Anstrichmittel und insbesondere emissionsarme Dispersionsfarben. Bevorzugt eignen sich die erfindungsgemäßen Polymerisatdispersionen für emissionsarme Beschichtungsmassen, mit hohem Pigmentanteil (PVK), vorzugsweise mit einer PVK oberhalb von 60% und insbesondere oberhalb 70%, insbesondere Dispersionsfarben, wie sie für Innenanstriche für Wände, Decken und Böden verwendet werden. Aber auch in geringerer PVK, d.h. in Bereichen von 35% bis 65% können Dispersionsfarben erhalten werden, wie sie bevorzugt für Fassadenfarben eingesetzt werden. Sie eignen sich daher für elastische Beschichtungen oder nach Zusatz von entsprechenden Komponenten (Silikonemulsionen bzw. Kaliwasserglas) als Grundlage für Silikonharzfarben oder Silikatfarben (O. Wagner, Farbe&Lack, Jahrgang 1991, Band 97, Seiten 109ff, sowie W. Heckl, STUCK 1982 (5) 28-30). Wegen ihrer guten hydrophoben und nicht klebrigmachenden Eigenschaften eignen sie sich auch als sogenannte Bindemittel für Leder oder Textilfasen.

Solche Beschichtungsmassen sind dem Fachmann im Prinzip bekannt. Eine ausführliche Beschreibung wässriger Kunststoffdispersionsfarben findet sich beispielsweise in Ullmanns Enzyklopädie der Technischen Chemie, VCH Weinheim, 1978, 4. Aufl., Band 15, Seiten 664ff.

Die erfindungsgemäßen emissionsarmen Beschichtungsmassen enthalten wenigstens ein erfindungsgemäßes Bindemittel, sowie Füllstoffe, Pigmente und gegebenenfalls weitere übliche Hilfsstoffe.

Die erfindungsgemäßen Beschichtungsmassen sind beispielweise Dispersionsfarben, Fliesenkleber oder Putze.

Füllstoffe und Pigmente sind feste Materialien in der Beschichtungsmasse, mit der Fähigkeit, chemische und physikalische Eigenschaften durch Wechselwirkung an der Beschichtungs-Oberfläche und durch ihr eigenes Eigenschaftsbild, wie Härte, Korngröße, Kornform, Farbe, Glanz usw., zu verändern. Sie können sphärische, kubische, nadelförmige, faserige oder auch plättchenförmige Gestalt aufweisen. Geeignete Füllstoffe sind beispielsweise natürlich vorkommende Silikate oder Aluminium- oder Magnesiumsilikate, wie Kaolin, Talkum, Kieselerden, Glimmer oder Erdalkalicarbonate, vorzugsweise Calciumcarbonat in Form von Calcit, Kreide oder Dolomit. Ferner seinen noch Oxide und Hydroxide genannt, wie Quarzmehl, Aluminiumtrihydroxid, Magnesium- oder Calciumhydroxid. Gefällte Kieselsäure oder Silikate oder pyrogene Kieselsäure sind synthetisch zugängliche Füllstoffe, die inbesonders hinsichtlich ihrer Korngröße und Korngrößenverteilung gezielt hergestellt und eingesetzt werden können.

Ein typisches Pigment ist beispielsweise Titandioxid, vorzugsweise in der Rutilform. Auch andere Weiß- oder Buntpigmente sind geläufig, wie Zinkoxid, Baryt, Ruß oder Graphit. Organische, synthetische Hohlpigmente sind ebenfalls bekannt und werden üblicherweise in Mischung mit Weißpigmenten eingesetzt. Sehr abriebfeste Materialien wie α-Aluminiumoxid, Borcarbid oder Siliciumcarbid werden in geringer Menge in feingemahlener Form in Spezialanwendungen eingesetzt. Abtönfarben können jedoch auch farbige Pigmente, beispielsweise Eisenoxide enthalten. Zu den üblichen Hilfsmitteln zählen Netzmittel, wie Natrium- oder Kaliumpolyphosphate, Polyacrylsäuren, deren Alkalisalze, Polyvinylalkohole usw.

Üblicherweise werden Füllstoffe und Pigmente stets in Mischungen eingesetzt. Ihre mittlere Teilchengröße (ausgedrückt als d50-Wert) bewegt sich vorzugsweise im Bereich von 1 bis 50 μm, kann aber in Form von sogenannten Grobfüllstoffen bis zu 200 μm betragen. In Putzen werden üblicherweise noch gröbere Füllstoffe eingesetzt.

Darüber hinaus enthalten die Beschichtungsmassen in der Regel Stoffe, die die Viskosität modifizieren, beispielsweise Celluloseether, wie Hydroxyethylcellulose und Assoziativverdicker. Weiterhin können den Beschichtungsmassen Dispergiermittel, Entschäumer, Konservierungs- oder Hydrophobiermittel sowie Farbstoffe, UV-Stabilisatoren, Antiblockmittel, Flammschutzmittel, Verlaufsmittel, Fasern oder weitere Bestandteile zugesetzt werden. Zur Erzielung bestimmter Effekte können natürlich gegebenfalls auch Lösungsmittel, Antifrostmittel oder Filmbildehilfsmittel der Formulierung zugesetzt werden, die der Fachmann zur Verlängerung der offenen Zeit oder bei Applikation in der Kälte einsetzt. Für Außenanwendungen werden üblicherweise auch Silikonemulsionen zugesetzt, die die Wasserfestigkeit der Beschichtungsmassen deutlich verbessert. Derartige Systeme sind z.B. aus A. Lork, Farbe&Lack, Jahrgang 2002, Band 108, Seiten 97ff, bekannt.

Die erfindungsgemäßen lösungsmittelfreien, emissionsarmen Beschichtungsmassen zeichnen sich gegenüber bereits bekannten Beschichtungsmassen durch eine hohe Abriebfestigkeit auch bei hohen Pigmentvolumenkonzentrationen, beispielsweise bei einer PVK von 75% (nach DIN 53 778) und eine hohe Lagerstabilität aus. Eine hohe Abriebsfestigkeit bei festgelegter PVK deutet auf ein gutes Pigmentbindevermögen hin. Eine hohe Abriebfestigkeit bedeutet einen Abrieb von weniger als 100 μm; vorzugsweise von weniger als 60 μm, besonders bevorzugt von weniger als 40 μm, bei der Prüfung der Nassscheuerfestigkeit.

Weiterhin sind die erfindungsgemäßen Bindemittel besonders silikatverträglich und lagerstabil.

Die im folgenden angegebenen Beispiele sollen die Erfindung erläutern, ohne sie jedoch einzuschränken.

Analytik und Testmethoden:

mittlerer Teilchendurchmesser:

Der zahlenmittlere Teilchendurchmesser der Polymerisatteilchen wurde durch dynamische Lichtstreuung (DSL) an einer 0,01 gew.-%igen wässrigen Dispersion bei 23°C mittels eines Autosizer IIC (Malvem Instruments, GB) ermittelt. Angegeben wird der mittlere Durchmesser der Kumulantenauswertung (cumulant z-average) der gemessenen Autokorrelationsfunktion (ISO-Norm 13 321) in nm.

Mindestfilmbildetemperatur (MFT):

Die Bestimmung der Mindestfilmbildetemperatur MFT erfolgte in Anlehnung an die DIN 53 787. Als Meßgerät diente eine Filmbildebank (= Metallplatte, an die ein Temperaturgradient angelegt wird). Die Verfilmung erfolgte bei einer Naßschichtdicke von 1 mm. Als Mindestfilmbildetemperatur wird die Temperatur angegeben, bei der der Film beginnt, rissig zu werden. (vgl. Ullmanns Enzyklopädie der technischen Chemie, 4. Aufl., Bd. 19, Verlag Chemie, Weinheim (1980), Seite 17).

Feststoffgehalt (FG):

Der Feststoffgehalt (FG) wurde gravimetrisch bestimmt, indem eine Probe 0,5 Stunden bei 140°C in einem Trockenschrank getrocknet wurde. Angegeben ist jeweils der Mittelwert zweier Messungen.

Viskosität

Die Viskosität wurde bei 23°C nach DIN EN ISO 3219 bei einem Geshwindigkeitsgefälle von 100/s in einem Rotationsviskosimeter gemessen und ist in mPas angegeben.

Nassscheuerfestigkeit:

Die Prüfung der Nassscheuerfestigkeit erfolgte entsprechend der aktuell gültige ISO 13 300. Mit Hilfe eines 60 mm breiten Rakels wurde auf eine Leneta-Folie von ca. 430 x 80 mm ein Anstrichfilm aufgezogen, dessen Trockenschichtdicke ca. 100 μm betrug. Dieser Film wurde bei Zimmertemperatur 7 Tage im Normklima gelagert. Dann wurde

in einem Scheuergerät der Fa. Ericson ein angefeuchtetes Scheuerpad über den Anstrich geführt. Nach 200 Doppelhüben (Scheuerzyklen) wurde der gravimetrisch bestimmte Farbabrieb in Kenntnis der gescheuerten Fläche in einen mittleren flächigen Abrieb umgerechnet und in μm Abrieb angegeben. Je geringer der Wert in um desto scheuerbeständiger erwies sich die Beschichtung. Zu Gunsten der besseren Vergleichbarkeit werden die Ergebnisse in μm Abrieb und nicht die norm-gerechten Klassen angegeben.

Lagerstabilität (LST Disp.; LST Farbe):

Als Maß für die Stabilität der Formulierungsmasse diente die Viskositätsentwicklung (Unterschied in mPas) einerseits der reinen Dispersion (LST Disp.), anderseits der formulierten Farbe (LST Farbe) vor und nach 14 tägiger Lagerung in einem geschlossenem Gebinde mit ca. 100 ml Farbe im Trockenschrank bei 50°C. Es ist erwünscht, dass sich die Viskositäten der Dispersion (siehe Tabelle 4) und der Farbe (siehe Tabelle 5) infolge dieser Warmlagerung, die eine längere Lagerdauer simulieren soll, nur minimal verändert. Eine Zunahme oder Abnahme der Viskosität um mehr als +/- 5% nach dieser Behandlung bedeutet, dass während der Lagerung des Produktes die Qualität der Farbe sich nachteilig entwickelt.

Silikatverträglichkeit (WG VTG):

In einigen Beispielen wurde die Verträglichkeit gegen Wasserglas (WG VTG) geprüft. Bei der Herstellung von Silikatfarben wird den Farben eine Wasserglaslösung zugemischt, die den pH-Wert der Farbe drastisch erhöht. Eine wünschenswerte gute Verträglichkeit ist durch die Note weniger als 2 zu sehen.

Wasseraufnahme (WA):

Für Fassadenfarben wird häufig die Wasseraufnahme (WA) des reinen Dispersionsfilmes herangezogen. Diese wird erhalten durch gravimetrische bestimmt Gewichtszunahme eines 25 $cm^2$ großen, bei Raumtemperatur getrockneten Dispersionsfilmes von ca. 1 mm Dicke nach 24 h Wasserlagerung (bei 23°C). Je höher der Wert ausfällt, desto größer ist auch die Wasseraufnahme einer Fassadenfarbe basierend auf diesem Bindemittel. Eine hohe Wasseraufnahme soll möglichst verhindert werden, um teure Silikonverbindungen einzusparen, deren Zusatz zur Einschränkung der Wasseraufnahme erforderlich sind.

Verwendete Emulgatoren:

| | |
|---|---|
| Emulgator-Lösung A: | 20 gew.-%ige Lösung eines Isotridecylethoxilates mit 8 mol EO |
| Emulgator-Lösung B: | 40 gew.-%ige Lösung eines Natriumsalzes eines $C_{14}$-Alkansulfonates |
| Emulgator-Lösung C: | 45 gew.-%ige Lösung Dowfax® 2A1 |
| Emulgator-Lösung D: | ca. 30 gew.-%ige Lösung eines Natriumsalzes eine $C_{12}/C_{14}$-Alkantriglykolethersulfates |
| Emulgator-Lösung E: | 30 gew.-%ige Lösung eines Natriumsalzes eines sulfatierten ethoxilierten $C_{12}/C_{14}$-Fettalkoholes mit etwa 25 mol EO |

Beispiele:

Beispiel 1 (Vergleichsbeispiel):

Allgemeine Vorschrift zur Herstellung der erfindungsgemäßen Polymerisatdispersionen

In einem 2 l-Polymerisationsgefäß mit Rührer und Rückflußkühler wurden

| | |
|---|---|
| 180,3 g | entionisiertes Wasser und |
| 8,9 g | eines wässrigen Polystyrollatex (Polymerisatfeststoffgehalt 33 Gew.-%, zahlenmittlerer Teilchendurchmesser ca. 30 nm) |

vorgelegt und unter Rühren auf 85°C erhitzt. Dann wurden 2,5 g einer Lösung von 1 g Natriumperoxodisulfat in 40 g Wasser zugegeben, nach 5 Minuten wurde begonnen den Rest der Lösung innerhalb von 4 Stunden und die Monomeremulsion Zulauf 1-I innerhalb von 3,5 Stunden kontinuierlich zuzudosieren. Nach vollständiger Zugabe ließ man noch 1 Stunde nachreagieren und kühlte auf 70°C ab. Während 3 Stunden dosierte man über zwei separate Zuläufe kontinuierlich 21,2 g einer 4,7 gew.-%igen wässrigen Lösung von tert.-Butylhydroperoxid sowie 19,5 g einer 0,19 gew.-%igen wässrigen Lösung von Ascorbinsäure zu und lässt eine weitere Stunde unter Beibehaltung der Temperatur nachrühren.

Zulauf 1-I:

| | |
|---|---|
| 90 g | entionisiertes Wasser |
| 20 g | Emulgator-Lösung A |
| 20 g | Emulgator-Lösung B |
| 245 g | Ethylhexylacrylat (Monomer A) |
| 245 g | Styrol (Monomer B) |
| 71,4 g | Itakonsäurelösung in Wasser, 7 gew.-%ig (Monomer C) |
| 5 g | Methacrylsäure (Monomer C) |

In die Dispersion wurde bei 70°C Wasserdampf entspannt und über einen aufgesetzten Kühler abgeleitet und kondensiert (und gewogen). Die Dampfbehandlung wurde so gesteuert, dass kontinuierlich, in 3 Stunden insgesamt 350 g Dampfkondensat erhalten wurden. Anschließend wurde der Reaktionsansatz auf Zimmertemperatur abgekühlt, mit 10 gew.-%iger Natronlauge auf einen pH-Wert von 7,6 eingestellt und durch einen Metallfilter mit 250 µm Maschenweite filtriert. Eine praktisch koagulatfreie und geruchsfreie Polymerdispersion wurde erhalten, deren Zusammensetzung und charakteristische physikalische Daten in den Tabellen 2 und 3 zusammengestellt sind.

Gaschromatographisch wurden 130 ppm Restmonomer und weniger als 600 ppm flüchtige Bestandteile, bezogen auf die Gesamtmasse, gefunden.

Allgemeine Vorschrift zur Herstellung der erfindungsgemäßen Dispersionsfarben

Die Herstellung der erfindungsgemäßen Dispersionsfarben erfolgte durch Abmischen der in Tabelle 1 angegebenen Komponenten in der dort angegebenen Reihenfolge mittels eines Dissolvers. Der wechselnde Feststoffgehalt der eingesetzten Polymerisatdispersionen wurde bei der Einsatzmenge berücksichtig und so bemessen, daß ca. 110 Gew.-Teile Dispersion in der Formulierung enthalten waren. Die Formulierungen wurden so eingestellt, daß sie eine Pigmentvolumenkonzentration (PVK) von 79% aufwiesen (die PVK wurde nach der oben angegebenen Formel berechnet; die einzelnen Volumina waren aus den gegebenen Mengen über die jeweilige Dichten zugänglich):

Tabelle 1.: Formulierung mit PVK=79% der erfindungsgemäßen Dispersionsfarben

| Gew.-Teile | Komponente |
|---|---|
| | |
| 300 | entionisiertes Wasser |
| 1 | 20 %ige wässrige Natronlauge |
| 3,6 | Verdicker, Celluloseether; Natrosol® 250 HR, Hercules GmbH |
| 5 | Pigmentverteiler MD 20, 25 gew.-%ige wässrige Lösung des Natriumsalzes eines Maleinsäure-Diisobuten-Copolymerisates, BASF AG |
| 3 | Konservierungsmittel (Parmetol® A 26, Schälke & Mayr Gm bH, Norderstedt) |
| 4 | Entschäumer; Byk® 037, Byk |
| 70 | Pigment; Titandioxid Kronos 2300, Kronos Titan GmbH, Leverkusen |
| 5 | feinteiliges Aluminiumsilikat P 820, Degussa AG, Frankfurt. |
| 235 | Omyacarb® 5 GU Füllstoff, Calciumcarbonat, mittlerer Teilchendurchmesser 5 µm; Omya GmbH, Köln |
| 55 | Sokal P2, gefälltes, unbeschichtetes Calcit, mittlere Teilchengröße 200-300 nm, Solvay Chemicals, Rheinberg |
| 100 | Omya Violette, feines Calciumcarbonat in Pulverform, mittle rer Teilchendurchmesser 98 % < 20 pm, 14 % < 1 pm, Omya GmbH, Köln |

(fortgesetzt)

| Gew.-Teile | Komponente |
|---|---|
| 65 | Finntalc M 15, Talkum, mittlerer Teilchendurchmesser 4,5 μm, Omya GmbH, Köln |
| 2 | Entschäumer; Byk® 037, Byk |
| 110 | Polymerdispersion |
| ca. 42 | entionisiertes Wasser, resultierend aus den unterschiedlichen Wassergehalten der einzelnen wässrigen Polymerisatdispersionen |

Die Ergebnisse der Prüfung Nassscheuerfestigkeit sowie der Stabilität sind in in Tabelle 4 zusammengefasst.

Beispiel 2 (Vergleichsbeispiel):

Analog Beispiel 1, mit dem Unterschied, dass 107,1 g Itakonsäurelösung und 2,5 g Methacrylsäure als Monomere C verwendet wurden.

Beispiel 3 (Vergleichsbeispiel):

Analog Beispiel 1, mit dem Unterschied, dass 107,1 g Itakonsäurelösung und 2,5 g Acrylsäure als Monomere C verwendet wurden.

Beispiel 4 (Vergleichsbeispiel):

Analog Beispiel 1, mit dem Unterschied, dass 142,8 g Itakonsäurelösung als Monomer C verwendet wurden.

Beispiel 5 (Vergleichsbeispiel):

Analog Beispiel 1, mit dem Unterschied, dass 178,5 g Itakonsäurelösung als Monomer C verwendet wurden.

Beispiel 6 (Vergleichsbeispiel):

Analog Beispiel 1, mit dem Unterschied, dass 5,0 g Acrylsäure als Monomer C verwendet wurden.

Beispiel 7 (Vergleichsbeispiel):

Analog Beispiel 1, mit dem Unterschied, dass die Monomeremulsion 7-I verwendet wurde.

Zulauf 7-I:

| | |
|---|---|
| 180 g | entionisiertes Wasser |
| 11,11 g | Emulgator-Lösung C |
| 8,93 g | Emulgator-Lösung D |
| 246,5 g | Ethylhexylacrylat (Monomer A) |
| 246,5 g | Styrol (Monomer B) |
| 7 g | Acrylsäure (Monomer C) |

Beispiele 8 bis 10:

Analog Beispiel 7, mit dem Unterschied, dass als Säurekomponente steigende Mengen an Acrylsäure verwendet wurden, gemäß Tabelle 2.

Beispiel 11 (Vergleichsbeispiel):

In einem 2 l-Polymerisationsgefäß mit Rührer und Rückflußkühler wurden

| | |
|---|---|
| 120,2 g | entionisiertes Wasser und |
| 10,6 g | eines wässrigen Polystyrollatex (Polymerisatfeststoffgehalt 33 Gew.%, zahlenmittlerer Teilchendurchmesser ca. 30 nm) |

vorgelegt und unter Rühren auf 85°C erhitzt. Dann wurde 4 g einer Lösung von 0,3 g Natriumperoxodisulfat in 45 g Wasser zugegeben, nach 5 Minuten wurde begonnen den Rest der Lösung innerhalb von 4,5 Stunden und die Monomeremulsion 11-I innerhalb 4,5 Stunden kontinuierlich zuzudosieren. Nach vollständiger Zugabe ließ man noch 1 Stunde nachreagieren und kühlte auf 70°C ab. Während 3 Stunden dosierte man über zwei separate Zuläufe kontinuierlich 16,0 g einer 8,7 gew.-%igen wässrigen Lösung von tert.-Butylhydroperoxid sowie eine wässrige Mischung aus 3,7 g einer 40 gew.-%igen Lösung von Natriumdisulfit und 1,0 g Aceton in 15,8 g Wasser zu. Nach vollständiger Zugabe wurde eine weitere Stunde nachgerührt.

Zulauf 11-I:

| | |
|---|---|
| 284,8 g | entionisiertes Wasser |
| 25 g | Emulgator-Lösung C |
| 20 g | Emulgator-Lösung B |
| 348,8 g | Ethylhexylacrylat (Monomer A) |
| 341,8 g | Styrol (Monomer B) |
| 10,5 g | Acrylsäure (Monomer C) |

Nach 1 h Wartezeit wurde in die Dispersion Wasserdampf entspannt und über einen aufgesetzten Kühler abgeleitet und kondensiert (und gewogen). Die Dampfbehandlung wurde so gesteuert, dass kontinuierlich, in 3 Stunden insgesamt 520 g Dampfkondensat erhalten wurden. Anschließend wurde der Reaktionsansatz auf Raumtemperatur abgekühlt, mit 10 gew.-%iger Natronlauge auf einen pH-Wert von 7,6 eingestellt, mit 3,1 g einer flüssigen Benzophenon-Mischung versetzt und durch einen Metallfilter mit 250 pm Maschenweite filtriert. Eine koagulat- und geruchsfreie Polymerdispersion wurde erhalten, deren charakteristische physikalische Daten in Tabelle 4 zusammengestellt sind.

Gaschromatographisch wurden 200 ppm Restmonomer und weniger als 800 ppm flüchtige Bestandteile, bezogen auf die Gesamtmasse, gefunden.

Beispiel 12-17 (Vergleichsbeispiele):

Analog Beispiel 6, jedoch mit Monomerzusammensetzung gemäß Tabelle 2.

Beispiel 18 :

Beispiel 8 wird mit dem Unterschied wiederholt, dass durch Verwendung von mehr Emulgator und mehr vorgelegtem Polystyrol-Latex eine feinerteilige Dispersion erhalten wird. Sie verfügt im Mittel über eine Teilchengröße von 144 nm.

Beispiel 19:

Beispiel 3 wird unter Zuhilfenahme der Monomeremulsion 19-I wiederholt. Nach vollständiger Zugabe der Emulsion wird 30 Minuten bei 85°C gehalten, zusätzlich eine Mischung aus 1,5 g Acrylsäure und 1,5 g Wasser zugegeben und weitere 30 Minuten bei 85°C gehalten, danach wie in Beispiel 1 beschrieben, weiter verfahren.

Zulauf 19-I:

| | |
|---|---|
| 210 g | entionisiertes Wasser |
| 13,3 g | Emulgator-Lösung C |
| 8,6 g | Emulgator-Lösung D |
| 300 g | Ethylhexylacrylat (Monomer A) |
| 288 g | Styrol (Monomer B) |
| 3 g | Acrylsäure (Monomer C) |

Beispiel 20 (Vergleichsbeispiel):

Analog Beispiel 12, jedoch unter Zusatz von 1,2 g Methacryloxypropyltrimethoxysilan.

Beispiele 21 bis 24 (Vergleichsbeispiele):

In den Vergleichsbeispielen 21 bis 24 wurden die Polymerdispersionen der Beispiele 1 bis 4 aus DE -A-102 06 994 nachgearbeitet. Als Puffersubstanz wurde Natriumacetat eingesetzt.

Beispiele 25 bis 27 (Vergleichsbeispiele):

In den Vergleichsbeispielen 25 bis 27 wurden die Polymerdispersionen der Vergleichsbeispiel 1, Beispiel 1 und 4 der EP-A-1 134 240 nachgearbeitet.

Beispiel 28 (Vergleichsbeispiel):

Im Vergleichsbeispiel 28 wurde eine Polymerdispersion, zu deren Herstellung ein höherer Anteil an Acrylsäure (4 Gew.-% bez. auf Gesamtpolymerisat) eingesetzt wurde, verwendet.

Die Polymerdispersionen der Beispiele 21 bis 28 wurden entsprechend der Standardformulierung in Beispiel 1 zur Herstellung von Dispersionsfarben verwendet und mit den erfindungsgemäßen Polymerisatdispersionen verglichen. (siehe Tabelle 4).

Tabelle 2: Zusammensetzung der erfindungsgemäßen Dispersionen (Bindemittel)

| Beispiel | EHA % | S % | IS % | MAS % | AS % | BA % | MMA % | AN % | HEA % | AAEMA % | BDA2 % | MEMO % | AM % |
|---|---|---|---|---|---|---|---|---|---|---|---|---|---|
| 1*) | 49 | 49 | 1 | 1 | | | | | | | | | |
| 2*) | 49 | 49 | 1,5 | 0,5 | | | | | | | | | |
| 3*) | 49 | 49 | 1,5 | | 0,5 | | | | | | | | |
| 4*) | 49 | 49 | 2 | | | | | | | | | | |
| 5*) | 48,8 | 48,8 | 2,5 | | | | | | | | | | |
| 6*) | 49 | 49 | 1 | | 1 | | | | | | | | |
| 7*) | 49,3 | 49,3 | | | 1,4 | | | | | | | | |
| 8 | 49 | 49 | | | 2 | | | | | | | | |
| 9 | 48,8 | 48,8 | | | 2,4 | | | | | | | | |
| 10 | 48,7 | 48,7 | | | 2,7 | | | | | | | | |

(fortgesetzt)

| Beispiel | EHA % | S % | IS % | MAS % | AS % | BA % | MMA % | AN % | HEA % | AAEMA % | BDA2 % | MEMO % | AM % |
|---|---|---|---|---|---|---|---|---|---|---|---|---|---|
| 11*) | 50,5 | 48,2 | | | 1,3 | | | | | | | | |
| 12*) | 25 | 48 | | | 2 | 25 | | | | | | | |
| 13*) | 49 | | | | 2 | | 49 | | | | | | |
| 14*) | 49 | 49 | | | 2 | | | | | | 0,1 | | |
| 15*) | 48 | 40 | | | 2 | | 8 | | 2 | | | | |
| 16*) | 48 | 48 | | | 2 | | | | | 2 | | | |
| 17*) | 51 | 37 | | | 2 | | | 10 | | | | | |
| 18 | 50 | 48 | | | 2 | | | | | | | | |
| 19 | 50 | 48 | | | 2 | | | | | | | | |
| 20*) | 25 | 47,9 | | | 2 | 25 | | | | | | 0,2 | |
| 21*) | 53 | 44,5 | | | 2,4 | | | | | | | | |
| 22*) | | 41,8 | | 2,5 | 0,3 | 55,4 | | | | | | | |
| 23*) | 52,3 | 46,3 | | | 0,3 | | | | | | | | 1,1 |
| 24*) | | 41,9 | | | 2,5 | 55,6 | | | | | | | |
| 25*) | | 58,8 | | | | 41,2 | | | | | | | |
| 26*) | | 58,8 | | | | 41,2 | | | | | 0,01 | | |
| 27*) | | 58,6 | | | 0,3 | 41 | | | | | 0,01 | | |
| 28*) | 24 | 48 | | | 4 | 24 | | | | | | | |

*) Vergleichsversuch
EHA 2-Ethylhexylacrylat
S Styrol
IS Itakonsäure
MAS Methacrylsäure
AS Acrylsäure
BA n-Butylacrylat
MMA Methylmethacrylat
AN Acrylnitril
HEA Hydroxyethylacrylat
AAEMA 2-Aceto-acetoxyethylmethacrylat
BDA2 Butandioldiacrylat
MEMO Methacryloxypropyltrimethoxysilan
AM Acrylamid

Die %-Angaben sind Gew.-%.

Tabelle 3: Eigenschaften der erfindungsgemäßen Dispersionen (Bindemittel)

| Beispiel | FG Gew.-% | pH | Visk mPas | LD % | DSL nm | Koag % |
|---|---|---|---|---|---|---|
| 1*) | 49,9 | 7,6 | 42 | 57 | 168 | 0,1 |
| 2*) | 49, 3 | 7,5 | 28 | 58 | 171 | 0,1 |
| 3*) | 48,8 | 7,6 | 35 | 58 | 168 | 0,1 |
| 4*) | 48,2 | 7,5 | 26 | 57 | 170 | 0,1 |
| 5*) | 47,7 | 7,5 | 22 | 58 | 169 | 0,1 |
| 6*) | 49,6 | 7,6 | 40 | 54 | 178 | 0,4 |
| 7*) | 49,7 | 7,3 | 48 | 55 | 174 | 0 |
| 8 | 49,4 | 7,5 | 48 | 57 | 173 | 0 |
| 9 | 49 | 7,5 | 72 | 61 | 164 | 0,1 |
| 10 | 49 | 7,5 | 70 | 55 | 177 | 0,2 |
| 11*) | 50,3 | 7,6 | 52 | 51 | 193 | 0 |
| 12*) | 53,2 | 7,4 | 70 | 52 | 191 | 0 |
| 13*) | 52,9 | 8,2 | 380 | 67 | 198 | 0 |
| 14*) | 52,9 | 7,3 | 85 | 51 | 192 | 0 |
| 15*) | 53,2 | 6,6 | 287 | 54 | 191 | 0 |
| 16*) | 52,5 | 7,0 | 93 | 50 | 192 | 0 |
| 17*) | 51,1 | 7,4 | 69 | 55 | 189 | 0 |
| 18 | 49,1 | 7,2 | n.b. | 71 | 144 | 0 |
| 19 | 49 | 7,1 | n.b. | 52 | 186 | 0 |
| 20*) | 53,4 | 7,4 | 124 | 52 | 183 | 0 |
| 21*) | 51 | 7,3 | 600 | 91 | 91 | 0,1 |
| 22*) | 50,8 | 7,1 | 550 | 92 | 100 | 0,1 |
| 23*) | 49 | 7,4 | 315 | 65 | 180 | 1 |
| 24*) | 49,7 | 7,1 | 495 | 92 | 100 | 0,1 |
| 25*) | 48,2 | 8,6 | 35 | 64 | 162 | 0,1 |
| 26*) | 43,3 | 7,5 | 17 | 62 | 156 | 0 |
| 27*) | 41,9 | 8,0 | 13 | 63 | 164 | 0,1 |
| 28*) | 53,8 | 7,2 | 160 | 54 | 189 | 0 |
| *) Vergleichsversuch<br>n.b. nicht bestimmt | | | | | | |

Tabelle 4: Eigenschaften der erfindungsgemäßen Dispersionsfarben

| Beispiel | LST Disp mPas | WG VTG Note | WA % | Visk. Farbe mPas | LST Farbe mPas | Scheuerfestigk. µm |
|---|---|---|---|---|---|---|
| 1*) | -1 | 0 | 7 | 700 | -190 | 32 |
| 2*) | 2 | 0 | 7,9 | 761 | -193 | 35 |
| 3*) | 2 | 0 | 9,2 | 751 | -212 | 36 |
| 4 | 2 | 0 | 8,2 | 782 | -1258 | 34 |

(fortgesetzt)

| Beispiel | LST Disp mPas | WG VTG Note | WA % | Visk. Farbe mPas | LST Farbe mPas | Scheuerfestigk. µm |
|---|---|---|---|---|---|---|
| 5 | 3 | 0 | 10,2 | 800 | 240 | 41 |
| 6 | 3 | 0 | 9,2 | 623 | 16 | 29 |
| 7 | 1 | 4 | 5,3 | 751 | 76 | 26 |
| 8 | -1 | 0 | 5,9 | 753 | 10 | 30 |
| 9 | -2 | 0 | 6,5 | 774 | 126 | 32 |
| 10 | 0 | 0 | 7,7 | 781 | 170 | 37 |
| 11 | 2 | 0 | 6,6 | 771 | 80 | 34 |
| 12 | 10 | 0 | 7,0 | 686 | 96 | 36 |
| 13 | -50 | 1 | 24,9 | 730 | -23 | 81 |
| 14 | 3 | 0 | 4,7 | 724 | 103 | 37 |
| 15 | -31 | 0 | 27,6 | 660 | 80 | 45 |
| 16 | -6 | 0 | 4,8 | 712 | 36 | 60 |
| 17 | -1 | 0 | 25,7 | 645 | -52 | 62 |
| 18 | n.b. | 0 | 5,2 | 1460 | 740 | 29 |
| 19 | n.b. | 0 | 23,0 | 1050 | -225 | 40 |
| 20 | 8 | 0 | 9,7 | 534 | 42 | 46 |
| 21*) | -53 | 0 | 11,4 | 960 | eingedickt | 41 |
| 22*) | -29 | 0 | 19,4 | 1240 | eingedickt | 47 |
| 23*) | -18 | 0 | 30,6 | 870 | 51 | 94 |
| 24*) | -47 | 0 | 24,8 | 964 | 256 | 43 |
| 25*) | -3 | 5 | 5 | 1980 | 1950 | 56 |
| 26*) | -3 | 5 | 7,5 | 2330 | 1970 | 64 |
| 27*) | -2 | 5 | 8,4 | 644 | 186 | 40 |
| 28*) | -22 | 0 | 20,8 | 888 | eingedickt | 67 |
| *) Vergleichsversuch | | | | | | |

Beispiel 29: (Referenzbeispiel)

Herstellung eines Kunstharz-Reibeputzes auf Basis der Polymerdispersion aus Beispiel 11. Nach folgender Formulierung (Tabelle 5) wurde ein Kunstharzputz angefertigt.

Tabelle 5: Formulierung eines Kunststoffdispersionsputzes

| Gew.-Teile | Komponente |
|---|---|
| | |
| 96 | Dispersion aus Beispiel 11 |
| 9 | Calgon® N, Natriumpolyphosphat, 25 gew.-%ig |
| 3 | Konservierungsmittel (Parmetol® A 26, Schülke & Mayr GmbH, Norderstedt) |
| 3 | Agitan® 280, Entschäumer, Münzig Chemie, Heilbronn |
| 40 | Tylose® MH 6000 XP, 4 gew.-%ige Lösung, Clariant AG |

(fortgesetzt)

| Gew.-Teile | Komponente |
|---|---|
| 5 | Basophob® WDS, Hydrophobierungsmittel, BASF AG |
| 30 | Pigment Kronos® 2043, Kronos Titan GmbH, Leverkusen |
| 64 | Wasser |
| 425 | Omyacarb® 40 GU, Füllstoff, Calciumcarbonat, Omya GmbH, Köln |
| 225 | Omyacarb® 130 GU, GU Füllstoff, Calciumcarbonat, Omya GmbH, Köln |
| 60 | Plastorit® O, natürliche Mineralien-Mischung, mittlere Teilchengröße 40 μm, Luzernac-Naintsch, Österreich |
| 40 | Quarzsand 1,5-2,0 mm, Quarzwerke Frechen |

Der Kunstharzputz wurde auf eine Fläche von ca. 1 $m^2$ aufgetragen und die Verarbeitungseigenschaften gegen einen Vergleich mit Acronal S 559 durchgeführt und entsprechend benotet, wobei 0=vorteilhaft und 5=schlecht darstellt.

| Eigenschaft | Vergleich (Acronal® S 559, BASF Aktiengesellschaft, DE) | Erfindungsgemäß |
|---|---|---|
| Aussehen im Gebinde | sehr pastös (4) | teigig (2) |
| Auftrag/Verarbeitung | gut (2) | gut (1) |
| Abreiben nach 5 min | leichtes Schmieren (1) | viel Schmieren (3) |
| Aussehen nach Trocknung | gut (1) | gut (1-2) |
| Pinholes | 1 | 1-2 |
| Mikrorisse | 1 | 1-2 |
| Wasseraufnahme nach 24 h Wasserlagerung | 16,7 % | 8,7 % |

Beispiel 30: (Referenzbeispiel)

Nach folgender Formulierung (Tabelle 6) wurde eine Silikatfarbe angefertigt.

Tabelle 6: Formulierung einer Silikatfarbe

| Gew.-Teile | Komponente |
|---|---|
| | |
| 232 | entionisiertes Wasser |
| 2 | Sapetin® D 20 |
| 2 | Betolin® Quart 25, schwach kationisiertes Stabilisator-Additiv, ca. 16 gew.-%ige Lösung, Woellner Silikat. GmbH, Ludwigshafen |
| 2 | Agitan® 280, Entschäumer, Münzig Chemie, Heilbronn |
| 2 | Rhodopol® 50 MD, Rhone-Poulenc Chemie GmbH, Frankfurt |
| 100 | Pigment; Titandioxid Kronos® RN 2043, Kronos Titan GmbH, Leverkusen |
| 100 | Polymerdispersion aus Beispiel 7 |
| 100 | Millicarb®, Füllstoff, Omya GmbH, Köln |
| 40 | Talkum AT 1 |
| 100 | Pastorit® 0000, natürliche Mineralien-Mischung, mittlere Teilchengröße 7,5 μm, Luzernac-Naintsch, Österreich |

(fortgesetzt)

| Gew.-Teile | Komponente |
|---|---|
| 70 | Plastorit® O, natürliche Mineralien-Mischung, mittlere Teilchengröße 40 µm, Luzernac-Naintsch, Österreich |
| 250 | Betolin® P 35, ca 35 gew.-% ige Lösung von Kaliwasserglas, Woellner Silikat GmbH, Ludwigshafen |

Die Farbe hatte einen Feststoffanteil von ca. 50 Gew.% und war gut verarbeitbar. Nach der DIN-Methode (180 µm Aufzug nass, 7 Tage Trocknung) wurden 2060 Scheuerzyklen erreicht. Nach 14 Tagen Lagerung der Silikatfarbe bei 50°C wurde bei Wiederholung der Scheuerprüfung ein Wert von 2470 Zyklen erhalten, was für eine ausgezeichnete Lagerstabilität spricht. Die kapillare Wasseraufnahme (DIN 52 617) lag bei 1,81 $kg/m^2/h^{1/2}$.

## Patentansprüche

**1.** Bindemittel enthaltend wenigstens ein Polymerisat, erhältlich durch radikalisch initiierte wässrige Emulsionspolymerisation einer Mischung von ethylenisch ungesättigten Monomeren, die aus

| | |
|---|---|
| 40 bis 50 Gew.-% | 2-Ethylhexylacrylat (Monomer A) |
| 0 bis 40 Gew.-% | eines oder mehrerer Monomeren, dessen Homopolymerisat eine Glasübergangstemperatur <10°C aufweist (Monomere B), |
| 45 bis 55 Gew.-% | Styrol (Monomer C), |
| 1,5 bis 3 Gew.-% | wenigstens eines säuregruppenhaltigen Monomeren ausgewählt aus der Gruppe Acrylsäure oder Methacrylsäure (Monomere D), und |
| 0 bis 5 Gew.-% | wenigstens eines weiteren Monomeren mit mindestens einer Hydroxy- und/oder Silan-Gruppe in der Seitenkette (Monomere E), |

jeweils bezogen auf die Gesamtmenge der zur Polymerisation eingesetzten ethylenisch ungesättigten Monomeren, besteht, unter Verwendung eines oder mehrerer Alkylphenolether-freier Emulgatoren, eines oder mehrerer Schutzkolloide und eines oder mehrerer Initiatoren, wobei das Polymerisat eine Mindestfilmbildungstemperatur von unter 15°C aufweist, sowie weniger als 0,01 Gew.-% Verbindungen mit einem Siedepunkt unter 50°C enthält, und wobei bei der Herstellung der Bindemittel keine Verbindungen mit einem Siedepunkt unter 50 ° C und keine Verbindungen, die derartige Verbindungen hydrolytisch abspalten können, eingesetzt werden.

**2.** Bindemittel gemäß Anspruch 1, **dadurch gekennzeichnet, dass** das Monomer B ausgewählt ist aus der Gruppe $C_1$- bis $C_{10}$-Alkylacrylate, $C_1$- bis $C_{10}$-Alkylmethacrylate, $C_5$- bis $C_{12}$-Cycloalkylacrylate und $C_5$- bis $C_{12}$-Cycloalkylmethacrylate.

**3.** Bindemittel gemäß Anspruch 1 oder 2, **dadurch gekennzeichnet, dass** das Monomer D Acrylsäure ist.

**4.** Bindemittel gemäß einem der Ansprüche 1 bis 3, **dadurch gekennzeichnet, dass** das Polymerisat eine Mindestfilmbildetemperatur von höchstens 10°C aufweist und frei von Filmbildehilfsmitteln und/oder Lösungsmitteln ist.

**5.** Bindemittel gemäß einem der Ansprüche 1 bis 4, **dadurch gekennzeichnet, dass** das Polymerisat aus Teilchen besteht, deren zahlenmittlerer Durchmesser 80 bis 300 nm beträgt.

**6.** Bindemittel gemäß einem der Ansprüche 1 bis 5, **dadurch gekennzeichnet, dass** das Bindemittel als wässrige Polymerdispersion mit einem Feststoffanteil von 25 bis 70 Gew.-% eingesetzt wird.

**7.** Bindemittel gemäß Anspruch 6, **dadurch gekennzeichnet, dass** die wässrige Polymerdispersion einen pH-Wert von 6,5 bis 9 hat.

**8.** Bindemittel gemäß einem der Ansprüche 1 bis 7, **dadurch gekennzeichnet, dass** das Polymerisat weniger als 0,01 Gew.-% an nicht umgesetzten Monomeren A bis E enthält, bezogen auf die Gesamtmasse eingesetzter Monomere.

**9.** Bindemittel gemäß einem der Ansprüche 1 bis 8, **dadurch gekennzeichnet, dass** das Polymerisat weniger als 0,1 Gew.-% flüchtiger organischer Verbindungen mit einem Siedepunkt unter 250°C enthält, bezogen auf die Gesamtmasse eingesetzter Monomere, wobei der Anteil an Wasser nicht mitgerechnet wird.

**10.** Verfahren zur Herstellung eines Bindemittels gemäß einem der Ansprüche 1 bis 9, **dadurch gekennzeichnet, dass** man eine Mischung von ethylenisch ungesättigten Monomeren, die aus

| | |
|---|---|
| 40 bis 50 Gew.-% | 2-Ethylhexylacrylat (Monomer A) |
| 0 bis 40 Gew.-% | eines oder mehrerer Monomeren, dessen Homopolymerisat eine Glasübergangstemperatur <10°C aufweist (Monomere B), |
| 45 bis 55 Gew.-% | Styrol (Monomer C), |
| 1,5 bis 3 Gew.-% | wenigstens eines säuregruppenhaltigen Monomeren ausgewählt aus der Gruppe Acrylsäure oder Methacrylsäure (Monomere D) und |
| 0 bis 5 Gew.-% | wenigstens eines weiteren Monomeren mit mindestens einer Hydroxy- und/oder Silan-Gruppe in der Seitenkette (Monomere E), |

jeweils bezogen auf die Gesamtmenge der zur Polymerisation eingesetzten ethylenisch ungesättigten Monomeren, besteht, unter Verwendung eines oder mehrerer Alkylphenolether-freier Emulgatoren, eines oder mehrerer Schutzkolloide und eines oder mehrerer Initiatoren, wobei das Polymerisat eine Mindestfilmbildungstemperatur von unter 15°C aufweist, durch radikalisch initiierte wässrige Emulsionspolymerisation umsetzt, wobei bei der Herstellung der Bindemittel keine Verbindungen mit einem Siedepunkt unter 50° C und keine Verbindungen, die derartige Verbindungen hydrolytisch abspalten können, eingesetzt werden

**11.** Beschichtungsmasse, enthaltend wenigstens ein Bindemittel gemäß einem der Ansprüche 1 bis 9, sowie Füllstoffe, Pigmente und gegebenenfalls weitere übliche Hilfsstoffe.

**12.** Beschichtungsmasse gemäß Anspruch 11, welche eine Pigmentvolumenkonzentration von mindestens 60 Gew.-%, bezogen auf die Gesamtmasse, aufweist.

**13.** Beschichtungsmasse gemäß Anspruch 11 oder 12, wobei der eingetrocknete und verfilmte Polymerisatfilm nach 24 stündiger Wasserlagerung eine Wasseraufnahme von weniger als 10% des Gewichtes des Polymerisatfilms aufweist.

**14.** Verwendung einer Beschichtungsmasse gemäß einem der Ansprüche 11 bis 13 als Dispersionsfarbe.

**15.** Verwendung nach Anspruch 14, wobei die Dispersionsfarbe zusätzlich eine Silikonemulsion und/oder Silikatlösung enthält.

**16.** Verwendung einer Beschichtungsmasse gemäß einem der Ansprüche 11 bis 13 als Kunststoffdispersionsputz.

**17.** Verwendung einer Beschichtungsmasse gemäß einem der Ansprüche 11 bis 13 allein oder in Kombination mit einer Silikonemulsion als Fliesenkleber oder Dichtungsmasse.

## Claims

**1.** A binder comprising at least one addition polymer obtainable by free-radically initiated aqueous emulsion polymerization of a mixture of ethylenically unsaturated monomers composed of

| | |
|---|---|
| 40 to 50% by weight | of 2-ethylhexyl acrylate (monomer A) |
| 0 to 40% by weight | of one or more monomers each of whose homopolymer has a glass transition temperature <10°C (monomers B), |
| 45 to 55% by weight | of styrene (monomer C), |
| 1.5 to 3% by weight | of at least one monomer containing acid groups selected from the group consisting of acrylic acid or methacrylic acid (monomers D), and |

(continued)

| | |
|---|---|
| 0 to 5% by weight | of at least one further monomer having at least one hydroxyl and/or silane group in the side chain (monomers E), |

based in each case on the total amount of ethylenically unsaturated monomers used for the polymerization, using one or more alkylphenol ether-free emulsifiers, one or more protective colloids and one or more initiators, the polymer having a minimum film-forming temperature of below 15°C and comprising less than 0.01% by weight of compounds having a boiling point below 50°C, and no use being made during the preparation of the binders of any compounds having a boiling point below 50°C or of any compounds able through hydrolysis to give off such compounds.

**2.** The binder according to claim 1, wherein monomer B is selected from the group consisting of $C_1$ to $C_{10}$ alkyl acrylates, $C_1$ to $C_{10}$ alkyl methacrylates, $C_5$ to $C_{12}$ cycloalkyl acrylates and $C_5$ to $C_{12}$ cycloalkyl methacrylates.

**3.** The binder according to claim 1 or 2, wherein monomer D is acrylic acid.

**4.** The binder according to any one of claims 1 to 3, wherein the polymer has a minimum film-forming temperature of not more than 10°C and is free from film-forming auxiliaries and/or solvents.

**5.** The binder according to any one of claims 1 to 4, wherein the polymer is composed of particles whose number-average diameter is 80 to 300 nm.

**6.** The binder according to any one of claims 1 to 5, used as an aqueous polymer dispersion having a solids fraction of 25 to 70% by weight.

**7.** The binder according to claim 6, wherein the aqueous polymer dispersion has a pH of 6.5 to 9.

**8.** The binder according to any one of claims 1 to 7, wherein the polymer comprises less than 0.01 % by weight of unreacted monomers A to E, based on the total mass of monomers used.

**9.** The binder according to any one of claims 1 to 8, wherein the polymer comprises less than 0.1 % by weight of volatile organic compounds having a boiling point below 250°C, based on the total mass of monomers used, excluding the fraction of water.

**10.** A process for preparing a binder according to any one of claims 1 to 9, which comprises reacting a mixture of ethylenically unsaturated monomers composed of

| | |
|---|---|
| 40 to 50% by weight | of 2-ethylhexyl acrylate (monomer A) |
| 0 to 40% by weight | of one or more monomers each of whose homopolymer has a glass transition temperature <10°C (monomers B), |
| 45 to 55% by weight | of styrene (monomer C), |
| 1.5 to 3% by weight | of at least one monomer containing acid groups selected from the group consisting of acrylic acid or methacrylic acid (monomers D), and |
| 0 to 5% by weight | of at least one further monomer having at least one hydroxyl and/or silane group in the side chain (monomers E), |

based in each case on the total amount of ethylenically unsaturated monomers used for the polymerization, using one or more alkylphenol ether-free emulsifiers, one or more protective colloids and one or more initiators, the polymer having a minimum film-forming temperature of below 15°C, by free-radically initiated aqueous emulsion polymerization, no use being made during the preparation of the binders of any compounds having a boiling point below 50°C or of any compounds able through hydrolysis to give off such compounds.

**11.** A coating material comprising at least one binder according to any one of claims 1 to 9 and also fillers, pigments and, if desired, further customary auxiliaries.

**12.** The coating material according to claim 11, having a pigment volume concentration of at least 60% by weight, based on the total mass.

**13.** The coating material according to claim 11 or 12, the dried and filmed polymer film after 24 hours of water storage exhibiting a water absorbency of less than 10% of the weight of the polymer film.

**14.** The use of a coating material according to any one of claims 11 to 13 as an emulsion pain.

**15.** The use according to claim 14, the emulsion paint further comprising a silicone emulsion and/or silicate solution.

**16.** The use of a coating material according to any one of claims 11 to 13 as a polymer dispersion plaster.

**17.** The use of a coating material according to any one of claims 11 to 13 alone or in combination with a silicone emulsion as a tile adhesive or sealant.

**Revendications**

**1.** Liant contenant au moins un polymérisat obtenu par polymérisation en émulsion aqueuse initiée radicalairement d'un mélange de monomères éthyléniquement insaturés, qui se compose de :

| | |
|---|---|
| 40 à 50% en poids | de 2-éthylhexylacrylate (monomère A) |
| 0 à 40% en poids | d'un ou plusieurs monomères dont l'homopolymérisat présente une température de transition vitreuse < 10°C (monomères B), |
| 45 à 55% en poids | de styrène (monomère C), |
| 1.5 à 3% en poids | d'au moins un monomère contenant des groupes acide sélectionné dans le groupe composé de l'acide acrylique ou l'acide méthacrylique (monomères D) et |
| 0 à 5% en poids | d'au moins un monomère supplémentaire avec au moins un groupe hydroxy et/ou silane dans la chaîne latérale (monomères E), |

par rapport, à chaque fois, à la quantité totale des monomères éthyléniquement insaturés utilisés pour la polymérisation, en utilisant un ou plusieurs émulsifiants exempts d'alkylphénoléther, un ou plusieurs colloïdes de protection et un ou plusieurs initiateurs, le polymérisat présentant une température filmogène minimale de moins de 15°C, ainsi que moins de 0,01% en poids de composés avec un point d'ébullition inférieur à 50°C, et sans utiliser pour la préparation des liants des composés avec un point d'ébullition inférieur à 50°C, ni des composés qui peuvent décomposer hydrolytiquement desdits composés.

**2.** Liant selon la revendication 1, **caractérisé en ce que** le monomère B est sélectionné dans le groupe des $C_1$-$C_{10}$-alkylacrylates, $C_1$-$C_{10}$-alkylméthacrylates, $C_5$-$C_{12}$-cycloalkylacrylates et $C_5$-$C_{12}$-cycloalkylméthacrylates.

**3.** Liant selon la revendication 1 ou 2, **caractérisé en ce que** le monomère D est l'acide acrylique.

**4.** Liant selon l'une des revendications 1 à 3, **caractérisé en ce que** le polymère présente une température filmogène minimale de 10°C maximum et est exempt d'adjuvants filmogènes et/ou de solvants.

**5.** Liant selon l'une des revendications 1 à 4, **caractérisé en ce que** le polymérisat se compose de particules dont le diamètre en moyenne numérique s'élève à 80 à 300 nm.

**6.** Liant selon l'une des revendications 1 à 5, **caractérisé en ce que** le liant est utilisé comme une dispersion polymère aqueuse avec une teneur en matières solides de 25 à 70% en poids.

**7.** Liant selon la revendication 6, **caractérisé en ce que** la dispersion polymère aqueuse a une valeur de pH de 6,5 à 9.

**8.** Liant selon l'une des revendications 1 à 7, **caractérisé en ce que** le polymérisat contient moins de 0,01% en poids de monomères A à E qui n'ont pas réagi, par rapport à la masse totale des monomères utilisés.

**9.** Liant selon l'une des revendications 1 à 8, **caractérisé en ce que** le polymérisat contient moins de 0,1% en poids de composés organiques volatils avec un point d'ébullition de moins de 250°C, par rapport à la masse totale des monomères utilisés, la proportion d'eau n'étant pas prise en considération.

**10.** Procédé de préparation d'un liant selon l'une des revendications 1 à 9, **caractérisé en ce que** l'on met en réaction un mélange de monomères éthyléniquement insaturés, qui se compose de :

| | |
|---|---|
| 40 à 50% en poids | de 2-éthylhexylacrylate (monomère A) |
| 0 à 40% en poids | d'un ou plusieurs monomères dont l'homopolymérisat présente une température de transition vitreuse < 10°C (monomères B), |
| 45 à 55% en poids | de styrène (monomère C), |
| 1.5 à 3% en poids | d'au moins un monomère contenant des groupes acide sélectionné dans le groupe composé de l'acide acrylique ou l'acide méthacrylique (monomères D) et |
| 0 à 5% en poids | d'au moins un monomère supplémentaire avec au moins un groupe hydroxy, céto et/ou silane dans la chaîne latérale (monomères E), |

par rapport, à chaque fois, à la quantité totale des monomères éthyléniquement insaturés utilisés pour la polymérisation, en utilisant un ou plusieurs émulsifiants exempts d'alkylphénoléther, un ou plusieurs colloïdes de protection et un ou plusieurs initiateurs, le polymérisat présentant une température filmogène minimale de moins de 15°C, par polymérisation en émulsion aqueuse initiée radicalairement, sans utiliser pour la préparation des liants des composés avec un point d'ébullition inférieur à 50°C, ni des composés qui peuvent décomposer hydrolytiquement desdits composés.

**11.** Masse de revêtement contenant au moins un liant conformément à l'une des revendications 1 à 9 ainsi que des charges, pigments et, éventuellement, d'autres adjuvants courants.

**12.** Masse de revêtement selon la revendication 11, qui présente une concentration en volume de pigment d'au moins 60% en poids par rapport à la masse totale.

**13.** Masse de revêtement selon l'une des revendications 11 ou 12, dans laquelle le film de polymérisat séché et recouvert d'un film présente après un dépôt d'eau de 24 heures une absorption d'eau de moins de 10% du poids du film du polymérisat.

**14.** Utilisation d'une masse de revêtement selon l'une des revendications 11 à 13 comme couleur de dispersion.

**15.** Utilisation selon la revendication 14, la couleur de dispersion contenant par ailleurs une émulsion de silicone et/ou une solution de silicate.

**16.** Utilisation d'une masse de revêtement selon l'une des revendications 11 à 13 comme enduit de dispersion du plastique.

**17.** Utilisation d'une masse de revêtement selon l'une des revendications 11 à 13, seule ou en combinaison avec une émulsion de silicone comme adhésif de carrelage ou masse d'étanchéité.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 652269 A
- EP 1134240 A
- WO 9421699 A
- EP 0810274 A
- DE 10206994 A
- DE 3423765 A
- DE 19858851 A
- EP 0331011 A
- US 5082895 A
- EP 0327006 A
- EP 0327376 A
- EP 0612771 A
- EP 0640629 A
- US 4269749 A
- EP 0952161 A
- EP 0209831 A
- EP 0040419 B
- DE 4213965 A
- EP 1021468 A
- DE 4435423 A
- DE 4419518 A
- DE 4435422 A

### In der Beschreibung aufgeführte Nicht-Patentliteratur

- *Ullmanns Enzyklopädie der technischen Chemie,* vol. 15, 668
- **H. Rinno.** *Farbe&Lack,* 1993, vol. 99, 697-704
- *Farbe&Lack, Jahrgang,* 2002, vol. 108, 58-63
- *Encyclopedia of Polymer Science and Technology,* 1966, vol. 5, 847ff